# EUROPEAN PATENT SPECIFICATION

(11) **EP 4 094 519 B1**
(45) Date of publication and mention of the grant of the patent: **17.09.2025**
(21) Application number: 21704139.1
(22) Date of filing: 14.01.2021
(51) Int. Cl.: H04W 72/0453, H04W 72/20, H04W 72/51, H04W 8/24, H04L 5/00, H04L 27/00

(54) **CONTROL RESOURCE CONFIGURATIONS**
STEUERUNGSRESSOURCENKONFIGURATIONEN
CONFIGURATIONS DE RESSOURCES DE COMMANDE

(30) Priority: 24.01.2020 US 202062965692 P; 13.01.2021 US 202117148399
(43) Date of publication of application: 30.11.2022
(73) Proprietor: QUALCOMM INCORPORATED, San Diego, California 92121-1714 (US)
(72) Inventor: WANG, Runxin, San Diego, California 92121-1714 (US); XU, Huilin, San Diego, California 92121-1714 (US); LEI, Jing, San Diego, California 92121-1714 (US); ANG, Peter Pui Lok, San Diego, California 92121-1714 (US)
(74) Representative: Reddie & Grose LLP
(86) International application number: PCT/US2021/013473
(87) International publication number: WO 2021/150425

(56) References cited:
- WO-A1-2019/139300
- US-A1- 2020 404 669
- QUALCOMM INCORPORATED: "Summary for DL/UL data scheduling maintenance", vol. RAN WG1, no. Gothenburg, Sweden; 20180820 - 20180824, 23 August 2018 (2018-08-23), XP051517195, Retrieved from the Internet <URL:http://www.3gpp.org/ftp/tsg%5Fran/WG1%5FRL1/TSGR1%5F94/Docs/R1%2D1809838%2Ezip> [retrieved on 20180823]
- LG ELECTRONICS: "Remaining details on search space", vol. RAN WG1, no. Reno, USA; 20171127 - 20171201, 18 November 2017 (2017-11-18), XP051369631, Retrieved from the Internet <URL:http://www.3gpp.org/ftp/tsg%5Fran/WG1%5FRL1/TSGR1%5F91/Docs/> [retrieved on 20171118]

## Description

### FIELD OF TECHNOLOGY

The following relates generally to wireless communications and more specifically to control resource configurations.

### BACKGROUND

Wireless communications systems are widely deployed to provide various types of communication content such as voice, video, packet data, messaging, broadcast, and so on. These systems may be capable of supporting communication with multiple users by sharing the available system resources (e.g., time, frequency, and power). Examples of such multiple-access systems include fourth generation (4G) systems such as Long Term Evolution (LTE) systems, LTE-Advanced (LTE-A) systems, or LTE-A Pro systems, and fifth generation (5G) systems which may be referred to as New Radio (NR) systems. These systems may employ technologies such as code division multiple access (CDMA), time division multiple access (TDMA), frequency division multiple access (FDMA), orthogonal frequency division multiple access (OFDMA), or discrete Fourier transform spread orthogonal frequency division multiplexing (DFT-S-OFDM). A wireless multiple-access communications system may include one or more base stations or one or more network access nodes, each simultaneously supporting communication for multiple communication devices, which may be otherwise known as user equipment (UE).

In some cases, a UE may be limited with regards to processing capability, power availability, or storage, among other examples. Such UEs may experience a reduction in performance when decoding transmissions on some resource configurations.

3GPP Tdoc R1-1809838 reiterates the proposal that if UE has indicated support for Capability #2 with a maximum number of scheduled RBs = 136 Then the UE does not expect any CORESET larger than 136 RBs to schedule with Capability #2 processing time. The UE follows Capability #1 otherwise.

WO 2019/139300 A1 discloses that the UE or the BS may determine a different channel estimation complexity depending on whether each of the at least one CORESET is configured with a wideband RS. The UE or the BS may determine the channel estimation complexity based on at least one of the number of symbols or the number of RBs in a CORSET configured with the wideband RS.

3GPP Tdoc R1-1719918 relates to situations where REGs overlap with SSB, and considers, as an option, REG or REG bundle level rate matching (or puncturing). Unless both can be supported by the UE simultaneously, a UE should not be expected to monitor both at the same time. In this case, either a UE skips measurement which may degrade the measurement performance or skip control channel monitoring.

### SUMMARY

The invention is defined by the appended independent claims. Advantageous embodiments are subject to the dependent claims.

In the following, each of the described methods, apparatuses, systems, examples and aspects, which does not fully correspond to the invention as defined in the appended claims, is thus not according to the invention and is, as well as the whole following description, present for illustration purposes only or to highlight specific aspects or features of the appended claims.

Generally, the described techniques provide for reducing complexity of detecting control information on one or more control resource sets (CORESETs). In some cases, a low complexity user equipment (UE) may experience reduced performance if a number of resource block (RB) groups in a CORESET is above a given threshold, even if the number of RB groups complies with a limit set by the network. Further, some networks may not support limitations on RB groups for CORESETs associated with a control channel having narrowband reference signals, resulting in reduced performance for a low complexity UE. Accordingly, a base station may configure a CORESET for a low complexity UE (e.g., or other type of UE) such that the CORESET may support reduction in complexity for UE operations compared with a CORESET configured for a different type of UE. Such a CORESET may be referred to as a reduced complexity CORESET. In some cases, if the CORESET configured for the low complexity UE (e.g., or other UE) is not a reduced complexity CORESET, the UE may suppress decoding downlink control messages or search space candidates on the CORESET.

A first UE and a second UE indicates one or more respective capabilities to a base station, and the base station may configure a first CORESET for the first UE (e.g., a low complexity UE or other type of UE) and a second CORESET for the second UE (e.g., a different type of UE) based on the one or more respective capabilities. The one or more capabilities of the UEs may include a number of supported RB groups. In some cases, the first CORESET may represent a reduced complexity CORESET, where a number of RB groups of the first CORESET may be limited. The first UE identifies the first CORESET, identifies a characteristic of the first CORESET, and determines whether to decode search space candidates or a control message on the first CORESET based on the identified characteristic and the one or more capabilities of the first UE. The characteristic of the first CORESET represents a number of RB groups of the CORESET.

If the first UE determines that the characteristic of the first CORESET corresponds to a respective capability of the first UE, the first UE may decode search space candidates or a control message on the CORESET. For example, a number of RBs of the CORESET may correspond to a number of RBs decodable by the first UE. If the first UE determines that the characteristic of the first CORESET (e.g., number of RBs) does not correspond to the capability (e.g., decodable RBs,) of the first UE, the first UE may suppress decoding the search space candidates or the control message.

### BRIEF DESCRIPTION OF THE DRAWINGS

FIG. 1 illustrates an example of a wireless communications system that supports control resource configurations in accordance with aspects of the present disclosure.
FIG. 2 illustrates an example of a wireless communications system that supports control resource configurations in accordance with aspects of the present disclosure.
FIG. 3A and 3B illustrate examples of resource configurations that support control resource configurations in accordance with aspects of the present disclosure.
FIG. 4A and 4B illustrate examples of resource configurations that support control resource configurations in accordance with aspects of the present disclosure.
FIG. 5 illustrates an example of a process flow that supports control resource configurations in accordance with aspects of the present disclosure.
FIGs. 6 and 7 show block diagrams of devices that support control resource configurations in accordance with aspects of the present disclosure.
FIG. 8 shows a block diagram of a communications manager that supports control resource configurations in accordance with aspects of the present disclosure.
FIG. 9 shows a diagram of a system including a device that supports control resource configurations in accordance with aspects of the present disclosure.
FIGs. 10 and 11 show block diagrams of devices that support control resource configurations in accordance with aspects of the present disclosure.
FIG. 12 shows a block diagram of a communications manager that supports control resource configurations in accordance with aspects of the present disclosure.
FIG. 13 shows a diagram of a system including a device that supports control resource configurations in accordance with aspects of the present disclosure.
FIGs. 14 through 17 show flowcharts illustrating methods that support control resource configurations in accordance with aspects of the present disclosure.

### DETAILED DESCRIPTION

A base station may transmit one or more control messages to a user equipment (UE) via frequency and time resources configured in a control resource set (CORESET) associated with a control channel. A CORESET may provide resource blocks (RBs) and symbol durations for a monitoring occasion of a control channel, and a search space associated with a CORESET may provide a periodicity and offset of a monitoring occasion of the control channel. In some cases, a CORESET may include a number of groups (e.g., clusters) of contiguous RBs.

In some cases, a UE may represent a low complexity UE or other type of UE. As described herein, a low complexity UE may represent a UE that operates using a lower tier of processing capabilities, a UE with fewer features or capabilities compared to other UEs, or a UE in a low power or low complexity mode of operation. A low complexity UE (e.g., or other UE) may benefit from simplification of a CORESET, for example, by limiting a number of groups of contiguous RBs in a configured CORESET. In some wireless communications systems, a network may limit a number of groups of RBs in a CORESET for a control channel having wideband reference signals. For example, a network may limit a number of groups of RBs in a CORESET to four groups of contiguous RBs.

In some cases, a low complexity UE (e.g., or other type of UE) may experience delays, increased power consumption, general performance reduction, and the like if a number of RB groups in a CORESET is above a given threshold (e.g., while still complying with the configured limit). Further, some systems may not support limitations on RB groups for CORESETs associated with a control channel having narrowband reference signals. As such, a low complexity UE (e.g., or other type of UE) configured with a CORESET associated with narrowband reference signals may experience delays, increased power consumption, general performance reduction, and the like. A low complexity UE (e.g., or other type of UE) may experience similar disadvantages if a CORESET is multiplexed with one or more other signals or channels.

Accordingly, a base station may configure a CORESET for a low complexity UE such that the CORESET may support reduction in complexity for UE operations (e.g., for detecting information on the CORESET) compared with a CORESET configured for a different type of UE. Such a CORESET may be referred to as a reduced complexity CORESET, where the CORESET may support reduction in complexity of information detection at a UE and may include resource characteristics that are simplified for the reduction in complexity. In some cases, if the CORESET for the low complexity UE is not a reduced complexity CORESET, the low complexity UE may suppress decoding downlink control messages or search space candidates on the CORESET.

For example, a base station may configure a first CORESET for a first UE (e.g., a low complexity UE or other type of UE) and may configure a second CORESET for a second UE (e.g., a different type of UE). The base station may indicate respective CORESET configurations to the UEs. In some cases, the first CORESET may represent a reduced complexity CORESET, where a number of RB groups of the first CORESET may be limited, or where the first CORESET may be restricted from multiplexing operations with one or more other signals or channels. The configuration of the first CORESET may be based on one or more capabilities of the first UE. The first UE may receive one or more control channels or control messages over the first CORESET based on the configuration of the CORESET. The UE may experience decreased delays, decreased power consumption, and general performance enhancement based on the configuration of the first CORESET. The second CORESET may represent a CORESET that is not reduced in complexity, based on one or more capabilities of the second UE.

In some cases, the base station may configure the first CORESET without reduced complexity (e.g., without simplification) or without one or more aspects of reduced complexity, such that the first CORESET may not represent a reduced complexity CORESET. For example, the first CORESET may include a number of RB groups that is greater than a number supported by the first UE. Additionally, or alternatively, the first CORESET may be multiplexed with one or more other signals or channels. The first UE may determine that the first CORESET includes a number of RB groups that is greater than the number supported by the UE or that the first CORESET is multiplexed with one or more other signals or channels. Based on determining that the first CORESET is configured without one or more aspects of reduced complexity, the first UE may determine to suppress decoding downlink control messages or control channels on the first CORESET.

Aspects of the disclosure are initially described in the context of wireless communications systems. Aspects of the disclosure are further illustrated by and described with reference to resource configurations, a process flow, apparatus diagrams, system diagrams, and flowcharts that relate to control resource configurations.

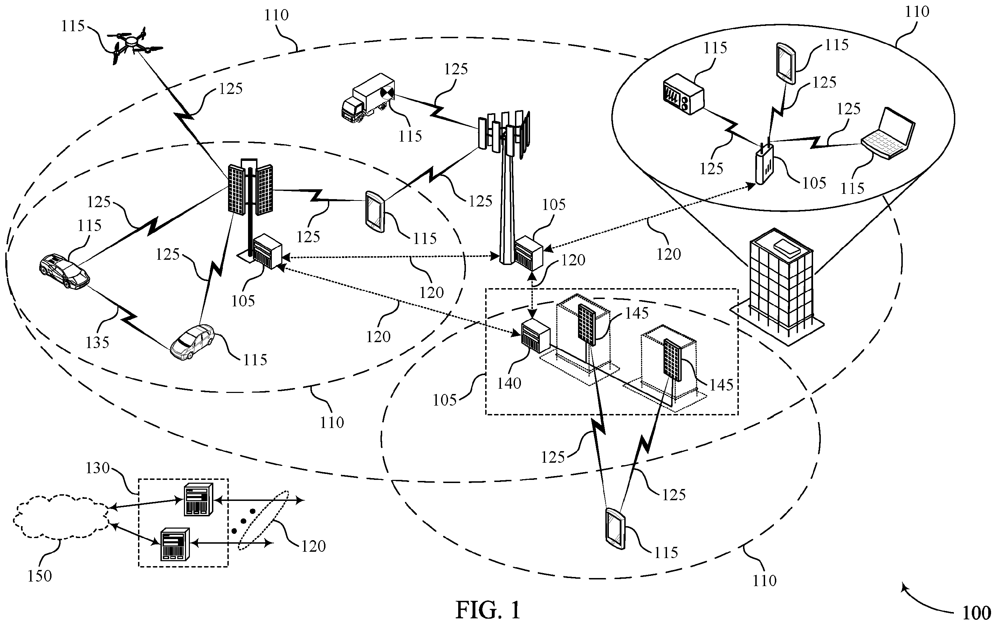

**FIG. 1** illustrates an example of a wireless communications system 100 that supports control resource configurations in accordance with aspects of the present disclosure. The wireless communications system 100 may include one or more base stations 105, one or more UEs 115, and a core network 130. In some examples, the wireless communications system 100 may be a Long Term Evolution (LTE) network, an LTE-Advanced (LTE-A) network, an LTE-A Pro network, or a New Radio (NR) network. In some examples, the wireless communications system 100 may support enhanced broadband communications, ultra-reliable (e.g., mission critical) communications, low latency communications, communications with low-cost and low-complexity devices, or any combination thereof.

The base stations 105 may be dispersed throughout a geographic area to form the wireless communications system 100 and may be devices in different forms or having different capabilities. The base stations 105 and the UEs 115 may wirelessly communicate via one or more communication links 125. Each base station 105 may provide a coverage area 110 over which the UEs 115 and the base station 105 may establish one or more communication links 125. The coverage area 110 may be an example of a geographic area over which a base station 105 and a UE 115 may support the communication of signals according to one or more radio access technologies.

The UEs 115 may be dispersed throughout a coverage area 110 of the wireless communications system 100, and each UE 115 may be stationary, or mobile, or both at different times. The UEs 115 may be devices in different forms or having different capabilities. Some example UEs 115 are illustrated in FIG. 1. The UEs 115 described herein may be able to communicate with various types of devices, such as other UEs 115, the base stations 105, or network equipment (e.g., core network nodes, relay devices, integrated access and backhaul (IAB) nodes, or other network equipment), as shown in FIG. 1.

The base stations 105 may communicate with the core network 130, or with one another, or both. For example, the base stations 105 may interface with the core network 130 through one or more backhaul links 120 (e.g., via an S1, N2, N3, or other interface). The base stations 105 may communicate with one another over the backhaul links 120 (e.g., via an X2, Xn, or other interface) either directly (e.g., directly between base stations 105), or indirectly (e.g., via core network 130), or both. In some examples, the backhaul links 120 may be or include one or more wireless links.

One or more of the base stations 105 described herein may include or may be referred to by a person having ordinary skill in the art as a base transceiver station, a radio base station, an access point, a radio transceiver, a NodeB, an eNodeB (eNB), a next-generation NodeB or a giga-NodeB (either of which may be referred to as a gNB), a Home NodeB, a Home eNodeB, or other suitable terminology.

A UE 115 may include or may be referred to as a mobile device, a wireless device, a remote device, a handheld device, or a subscriber device, or some other suitable terminology, where the "device" may also be referred to as a unit, a station, a terminal, or a client, among other examples. A UE 115 may also include or may be referred to as a personal electronic device such as a cellular phone, a personal digital assistant (PDA), a tablet computer, a laptop computer, or a personal computer. In some examples, a UE 115 may include or be referred to as a wireless local loop (WLL) station, an Internet of Things (IoT) device, an Internet of Everything (IoE) device, or a machine type communications (MTC) device, among other examples, which may be implemented in various objects such as appliances, or vehicles, meters, among other examples.

The UEs 115 described herein may be able to communicate with various types of devices, such as other UEs 115 that may sometimes act as relays as well as the base stations 105 and the network equipment including macro eNBs or gNBs, small cell eNBs or gNBs, or relay base stations, among other examples, as shown in FIG. 1.

The UEs 115 and the base stations 105 may wirelessly communicate with one another via one or more communication links 125 over one or more carriers. The term "carrier" may refer to a set of radio frequency spectrum resources having a defined physical layer structure for supporting the communication links 125. For example, a carrier used for a communication link 125 may include a portion of a radio frequency spectrum band (e.g., a bandwidth part (BWP)) that is operated according to one or more physical layer channels for a given radio access technology (e.g., LTE, LTE-A, LTE-A Pro, NR). Each physical layer channel may carry acquisition signaling (e.g., synchronization signals, system information), control signaling that coordinates operation for the carrier, user data, or other signaling. The wireless communications system 100 may support communication with a UE 115 using carrier aggregation or multi-carrier operation. A UE 115 may be configured with multiple downlink component carriers and one or more uplink component carriers according to a carrier aggregation configuration. Carrier aggregation may be used with both frequency division duplexing (FDD) and time division duplexing (TDD) component carriers.

In some examples (e.g., in a carrier aggregation configuration), a carrier may also have acquisition signaling or control signaling that coordinates operations for other carriers. A carrier may be associated with a frequency channel (e.g., an evolved universal mobile telecommunication system terrestrial radio access (E-UTRA) absolute radio frequency channel number (EARFCN)) and may be positioned according to a channel raster for discovery by the UEs 115. A carrier may be operated in a standalone mode where initial acquisition and connection may be conducted by the UEs 115 via the carrier, or the carrier may be operated in a non-standalone mode where a connection is anchored using a different carrier (e.g., of the same or a different radio access technology).

The communication links 125 shown in the wireless communications system 100 may include uplink transmissions from a UE 115 to a base station 105, or downlink transmissions from a base station 105 to a UE 115. Carriers may carry downlink or uplink communications (e.g., in an FDD mode) or may be configured to carry downlink and uplink communications (e.g., in a TDD mode).

A carrier may be associated with a particular bandwidth of the radio frequency spectrum, and in some examples the carrier bandwidth may be referred to as a "system bandwidth" of the carrier or the wireless communications system 100. For example, the carrier bandwidth may be one of a number of determined bandwidths for carriers of a particular radio access technology (e.g., 1.4, 3, 5, 10, 15, 20, 40, or 80 megahertz (MHz)). Devices of the wireless communications system 100 (e.g., the base stations 105, the UEs 115, or both) may have hardware configurations that support communications over a particular carrier bandwidth or may be configurable to support communications over one of a set of carrier bandwidths. In some examples, the wireless communications system 100 may include base stations 105 or UEs 115 that support simultaneous communications via carriers associated with multiple carrier bandwidths. In some examples, each served UE 115 may be configured for operating over portions (e.g., a sub-band, a BWP) or all of a carrier bandwidth.

Signal waveforms transmitted over a carrier may be made up of multiple subcarriers (e.g., using multi-carrier modulation (MCM) techniques such as orthogonal frequency division multiplexing (OFDM) or discrete Fourier transform spread OFDM (DFT-S-OFDM)). In a system employing MCM techniques, a resource element may include one symbol period (e.g., a duration of one modulation symbol) and one subcarrier, where the symbol period and subcarrier spacing are inversely related. The number of bits carried by each resource element may depend on the modulation scheme (e.g., the order of the modulation scheme, the coding rate of the modulation scheme, or both). Thus, the more resource elements that a UE 115 receives and the higher the order of the modulation scheme, the higher the data rate may be for the UE 115. A wireless communications resource may refer to a combination of a radio frequency spectrum resource, a time resource, and a spatial resource (e.g., spatial layers or beams), and the use of multiple spatial layers may further increase the data rate or data integrity for communications with a UE 115.

One or more numerologies for a carrier may be supported, where a numerology may include a subcarrier spacing (Δ*f*) and a cyclic prefix. A carrier may be divided into one or more BWPs having the same or different numerologies. In some examples, a UE 115 may be configured with multiple BWPs. In some examples, a single BWP for a carrier may be active at a given time and communications for the UE 115 may be restricted to one or more active BWPs.

The time intervals for the base stations 105 or the UEs 115 may be expressed in multiples of a basic time unit which may, for example, refer to a sampling period of *Tₛ =* 1/(Δ*fₘₐₓ · N_{f}*) seconds, where Δ*fₘₐₓ* may represent the maximum supported subcarrier spacing, and *N_{f}* may represent the maximum supported discrete Fourier transform (DFT) size. Time intervals of a communications resource may be organized according to radio frames each having a specified duration (e.g., 10 milliseconds (ms)). Each radio frame may be identified by a system frame number (SFN) (e.g., ranging from 0 to 1023).

Each frame may include multiple consecutively numbered subframes or slots, and each subframe or slot may have the same duration. In some examples, a frame may be divided (e.g., in the time domain) into subframes, and each subframe may be further divided into a number of slots. Alternatively, each frame may include a variable number of slots, and the number of slots may depend on subcarrier spacing. Each slot may include a number of symbol periods (e.g., depending on the length of the cyclic prefix prepended to each symbol period). In some wireless communications systems 100, a slot may further be divided into multiple mini-slots containing one or more symbols. Excluding the cyclic prefix, each symbol period may contain one or more (e.g., *N_{f}*) sampling periods. The duration of a symbol period may depend on the subcarrier spacing or frequency band of operation.

A subframe, a slot, a mini-slot, or a symbol may be the smallest scheduling unit (e.g., in the time domain) of the wireless communications system 100 and may be referred to as a transmission time interval (TTI). In some examples, the TTI duration (e.g., the number of symbol periods in a TTI) may be variable. Additionally, or alternatively, the smallest scheduling unit of the wireless communications system 100 may be dynamically selected (e.g., in bursts of shortened TTIs (sTTIs)).

Physical channels may be multiplexed on a carrier according to various techniques. A physical control channel and a physical data channel may be multiplexed on a downlink carrier, for example, using one or more of time division multiplexing (TDM) techniques, frequency division multiplexing (FDM) techniques, or hybrid TDM-FDM techniques. A control region (e.g., a control resource set (CORESET)) for a physical control channel may be defined by a number of symbol periods and may extend across the system bandwidth or a subset of the system bandwidth of the carrier. One or more control regions (e.g., CORESETs) may be configured for a set of the UEs 115. For example, one or more of the UEs 115 may monitor or search control regions for control information according to one or more search space sets, and each search space set may include one or multiple control channel candidates in one or more aggregation levels arranged in a cascaded manner. An aggregation level for a control channel candidate may refer to a number of control channel resources (e.g., control channel elements (CCEs)) associated with encoded information for a control information format having a given payload size. Search space sets may include common search space sets configured for sending control information to multiple UEs 115 and UE-specific search space sets for sending control information to a specific UE 115.

In some examples, a base station 105 may be movable and therefore provide communication coverage for a moving geographic coverage area 110. In some examples, different geographic coverage areas 110 associated with different technologies may overlap, but the different geographic coverage areas 110 may be supported by the same base station 105. In other examples, the overlapping geographic coverage areas 110 associated with different technologies may be supported by different base stations 105. The wireless communications system 100 may include, for example, a heterogeneous network in which different types of the base stations 105 provide coverage for various geographic coverage areas 110 using the same or different radio access technologies.

Some UEs 115 may be configured to employ operating modes that reduce power consumption, such as half-duplex communications (e.g., a mode that supports one-way communication via transmission or reception, but not transmission and reception simultaneously). In some examples, half-duplex communications may be performed at a reduced peak rate. Other power conservation techniques for the UEs 115 include entering a power saving deep sleep mode when not engaging in active communications, operating over a limited bandwidth (e.g., according to narrowband communications), or a combination of these techniques. For example, some UEs 115 may be configured for operation using a narrowband protocol type that is associated with a defined portion or range (e.g., set of subcarriers or resource blocks (RBs)) within a carrier, within a guard-band of a carrier, or outside of a carrier.

The wireless communications system 100 may be configured to support ultra-reliable communications or low-latency communications, or various combinations thereof. For example, the wireless communications system 100 may be configured to support ultra-reliable low-latency communications (URLLC) or mission critical communications. The UEs 115 may be designed to support ultra-reliable, low-latency, or critical functions (e.g., mission critical functions). Ultra-reliable communications may include private communication or group communication and may be supported by one or more mission critical services such as mission critical push-to-talk (MCPTT), mission critical video (MCVideo), or mission critical data (MCData). Support for mission critical functions may include prioritization of services, and mission critical services may be used for public safety or general commercial applications. The terms ultra-reliable, low-latency, mission critical, and ultra-reliable low-latency may be used interchangeably herein.

In some examples, a UE 115 may also be able to communicate directly with other UEs 115 over a device-to-device (D2D) communication link 135 (e.g., using a peer-to-peer (P2P) or D2D protocol). One or more UEs 115 utilizing D2D communications may be within the geographic coverage area 110 of a base station 105. Other UEs 115 in such a group may be outside the geographic coverage area 110 of a base station 105 or be otherwise unable to receive transmissions from a base station 105. In some examples, groups of the UEs 115 communicating via D2D communications may utilize a one-to-many (1:M) system in which each UE 115 transmits to every other UE 115 in the group. In some examples, a base station 105 facilitates the scheduling of resources for D2D communications. In other cases, D2D communications are carried out between the UEs 115 without the involvement of a base station 105.

The core network 130 may provide user authentication, access authorization, tracking, Internet Protocol (IP) connectivity, and other access, routing, or mobility functions. The core network 130 may be an evolved packet core (EPC) or 5G core (5GC), which may include at least one control plane entity that manages access and mobility (e.g., a mobility management entity (MME), an access and mobility management function (AMF)) and at least one user plane entity that routes packets or interconnects to external networks (e.g., a serving gateway (S-GW), a Packet Data Network (PDN) gateway (P-GW), or a user plane function (UPF)). The control plane entity may manage non-access stratum (NAS) functions such as mobility, authentication, and bearer management for the UEs 115 served by the base stations 105 associated with the core network 130. User IP packets may be transferred through the user plane entity, which may provide IP address allocation as well as other functions. The user plane entity may be connected to the network operators IP services 150. The operators IP services 150 may include access to the Internet, Intranet(s), an IP Multimedia Subsystem (IMS), or a Packet-Switched Streaming Service.

Some of the network devices, such as a base station 105, may include subcomponents such as an access network entity 140, which may be an example of an access node controller (ANC). Each access network entity 140 may communicate with the UEs 115 through one or more other access network transmission entities 145, which may be referred to as radio heads, smart radio heads, or transmission/reception points (TRPs). Each access network transmission entity 145 may include one or more antenna panels. In some configurations, various functions of each access network entity 140 or base station 105 may be distributed across various network devices (e.g., radio heads and ANCs) or consolidated into a single network device (e.g., a base station 105).

The wireless communications system 100 may operate using one or more frequency bands, typically in the range of 300 megahertz (MHz) to 300 gigahertz (GHz). Generally, the region from 300 MHz to 3 GHz is known as the ultra-high frequency (UHF) region or decimeter band because the wavelengths range from approximately one decimeter to one meter in length. The UHF waves may be blocked or redirected by buildings and environmental features, but the waves may penetrate structures sufficiently for a macro cell to provide service to the UEs 115 located indoors. The transmission of UHF waves may be associated with smaller antennas and shorter ranges (e.g., less than 100 kilometers) compared to transmission using the smaller frequencies and longer waves of the high frequency (HF) or very high frequency (VHF) portion of the spectrum below 300 MHz.

The wireless communications system 100 may utilize both licensed and unlicensed radio frequency spectrum bands. For example, the wireless communications system 100 may employ License Assisted Access (LAA), LTE-Unlicensed (LTE-U) radio access technology, or NR technology in an unlicensed band such as the 5 GHz industrial, scientific, and medical (ISM) band. When operating in unlicensed radio frequency spectrum bands, devices such as the base stations 105 and the UEs 115 may employ carrier sensing for collision detection and avoidance. In some examples, operations in unlicensed bands may be based on a carrier aggregation configuration in conjunction with component carriers operating in a licensed band (e.g., LAA). Operations in unlicensed spectrum may include downlink transmissions, uplink transmissions, P2P transmissions, or D2D transmissions, among other examples.

A base station 105 or a UE 115 may be equipped with multiple antennas, which may be used to employ techniques such as transmit diversity, receive diversity, multiple-input multiple-output (MIMO) communications, or beamforming. The antennas of a base station 105 or a UE 115 may be located within one or more antenna arrays or antenna panels, which may support MIMO operations or transmit or receive beamforming. For example, one or more base station antennas or antenna arrays may be co-located at an antenna assembly, such as an antenna tower. In some examples, antennas or antenna arrays associated with a base station 105 may be located in diverse geographic locations. A base station 105 may have an antenna array with a number of rows and columns of antenna ports that the base station 105 may use to support beamforming of communications with a UE 115. Likewise, a UE 115 may have one or more antenna arrays that may support various MIMO or beamforming operations. Additionally, or alternatively, an antenna panel may support radio frequency beamforming for a signal transmitted via an antenna port.

The base stations 105 or the UEs 115 may use MIMO communications to exploit multipath signal propagation and increase the spectral efficiency by transmitting or receiving multiple signals via different spatial layers. Such techniques may be referred to as spatial multiplexing. The multiple signals may, for example, be transmitted by the transmitting device via different antennas or different combinations of antennas. Likewise, the multiple signals may be received by the receiving device via different antennas or different combinations of antennas. Each of the multiple signals may be referred to as a separate spatial stream and may carry bits associated with the same data stream (e.g., the same codeword) or different data streams (e.g., different codewords). Different spatial layers may be associated with different antenna ports used for channel measurement and reporting. MIMO techniques include single-user MIMO (SU-MIMO), where multiple spatial layers are transmitted to the same receiving device, and multiple-user MIMO (MU-MIMO), where multiple spatial layers are transmitted to multiple devices.

Beamforming, which may also be referred to as spatial filtering, directional transmission, or directional reception, is a signal processing technique that may be used at a transmitting device or a receiving device (e.g., a base station 105, a UE 115) to shape or steer an antenna beam (e.g., a transmit beam, a receive beam) along a spatial path between the transmitting device and the receiving device. Beamforming may be achieved by combining the signals communicated via antenna elements of an antenna array such that some signals propagating at particular orientations with respect to an antenna array experience constructive interference while others experience destructive interference. The adjustment of signals communicated via the antenna elements may include a transmitting device or a receiving device applying amplitude offsets, phase offsets, or both to signals carried via the antenna elements associated with the device. The adjustments associated with each of the antenna elements may be defined by a beamforming weight set associated with a particular orientation (e.g., with respect to the antenna array of the transmitting device or receiving device, or with respect to some other orientation).

The wireless communications system 100 may be a packet-based network that operates according to a layered protocol stack. In the user plane, communications at the bearer or Packet Data Convergence Protocol (PDCP) layer may be IP-based. A Radio Link Control (RLC) layer may perform packet segmentation and reassembly to communicate over logical channels. A Medium Access Control (MAC) layer may perform priority handling and multiplexing of logical channels into transport channels. The MAC layer may also use error detection techniques, error correction techniques, or both to support retransmissions at the MAC layer to improve link efficiency. In the control plane, the Radio Resource Control (RRC) protocol layer may provide establishment, configuration, and maintenance of an RRC connection between a UE 115 and a base station 105 or a core network 130 supporting radio bearers for user plane data. At the physical layer, transport channels may be mapped to physical channels.

A control channel may be associated with a CORESET and a search space that provide occasions to monitor for the control channel. Multiple types of control channel demodulation reference signals (DMRS) may be defined for a CORESET. Two types of DMRS may include wideband reference signals (e.g., wideband DMRS) and narrowband reference signals (e.g., narrowband DMRS). Wideband DMRS may be transmitted over a segment of all contiguous RBs allocated to a CORESET when at least one resource element group bundle of the control channel is transmitted in the segment. A same precoder may be used in the segment of RBs, which may be configured via RRC signaling. Narrowband DMRS may be transmitted in resource element group bundles that make up the control channel, and may not be transmitted in other resources of segments that do not carry resource element groups associated with a control message. A same precoder may be used in each bundle of resource element groups of the control channel, which may be configured via RRC signaling.

A CORESET may include a number of groups of contiguous RBs, where the RB groups may support FDM of the CORESET and other signals such as a synchronization signal block (SSB) and cell-specific reference signals (CRS). In some cases, narrowband DMRS may be less impacted than wideband DMRS by a number of RB groups in a CORESET.

In some cases, a low complexity UE (e.g., or other type of UE) may experience reduced performance if a number of RB groups in a CORESET is above a given threshold, even if the number of RB groups complies with a limit set by the network. Further, some networks may not support limitations on RB groups for CORESETs associated with a control channel having narrowband reference signals, resulting in reduced performance for a low complexity UE. A low complexity UE may experience similar disadvantages if a CORESET is multiplexed with one or more other signals or channels. Accordingly, a base station may configure a CORESET for a low complexity UE such that the CORESET may support reduction in complexity for UE operations (e.g., detecting information) compared with a CORESET configured for a different type of UE. Such a CORESET may be referred to as a reduced complexity CORESET. For example, a reduced complexity CORESET may include a lower number of RB groups or may not overlap with any other signal or channel. In some cases, if the CORESET for the low complexity UE is not a reduced complexity CORESET, the low complexity UE may suppress decoding downlink control messages or search space candidates on the CORESET.

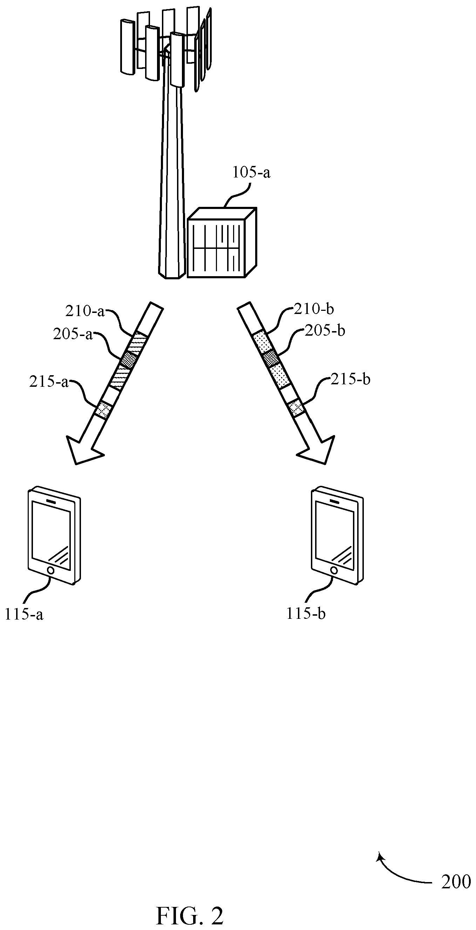

**FIG. 2** illustrates an example of a wireless communications system 200 that supports control resource configurations in accordance with the invention. In some examples, wireless communications system 200 may implement aspects of wireless communications system 100. For example, wireless communications system 200 may include a base station 105-a and UEs 115-a and 115-b, which may be examples of a base station 105 and UEs 115 described with reference to FIG. 1. Base station 105-a may communicate with UE 115-a and UE 115-b in the downlink or the uplink. For example, base station 105-a may transmit one or more downlink control messages 205 to UE 115-a or 115-b. Base station 105-a may transmit the one or more downlink control messages 205 via frequency and time resources configured in a CORESET 210 associated with a respective control channel.

A CORESET 210 may provide RBs and symbol durations for a monitoring occasion of a control channel (e.g., physical downlink control channel (PDCCH)). In some cases, a CORESET 210 may include a number of groups (e.g., clusters) of contiguous RBs. Base station 105-a may transmit one or more downlink control messages 205 associated with a control channel to UE 115-a or 115-b via a respective CORESET 210. The control channel may include one or more DMRS for a UE 115 to estimate and track the control channel. The DMRS may include wideband reference signals or narrowband reference signals, based on a configuration of the control channel.

In some cases, a UE 115 (e.g., UE 115-a) may represent a low complexity UE 115 or other type of UE 115. For example, UE 115-a may represent a low complexity UE 115, while UE 115-b may represent another type of UE 115 (e.g., a full capability or non-low complexity UE 115). As described herein, a low complexity UE 115 may represent a UE 115 that operates using a lower tier of processing capabilities, a UE 115 with fewer features or capabilities compared to other UEs 115 (e.g., an NR light UE 115 or reduced capability UE 115), or a UE 115 in a low power or low complexity mode of operation. UE 115-a may benefit from simplification of a CORESET 210, for example, by limiting a number of groups of contiguous RBs in a configured CORESET 210 (e.g., to reduce decoding complexity at UE 115-a). In some wireless communications systems, a network may limit a number of groups of RBs in a CORESET 210 for a control channel having wideband reference signals. For example, a network may limit a number of groups of RBs in a CORESET 210-a to four groups of contiguous RBs.

In some cases, UE 115-a may experience delays, increased power consumption, or general performance reduction, among other examples, if a number of RB groups in a CORESET 210 is above a given threshold (e.g., while still below the limit), and in some cases if the number of RB groups is greater than one. Further, some systems may not support limitations on RB groups for CORESETs 210 associated with a control channel having narrowband reference signals. As such, if UE 115-a is configured with a CORESET 210 associated with narrowband reference signals, UE 115-a may experience delays, increased power consumption, general performance reduction, and the like. UE 115-a may experience similar disadvantages if a CORESET 210 is multiplexed (e.g., FDMed) with one or more other signals or channels.

Accordingly, a base station 105 may configure a CORESET 210 for UE 115-a such that the CORESET may support reduction in complexity for UE operations (e.g., detecting or decoding information) compared with a CORESET 210 configured for a different type of UE 115 (e.g., UE 115-b). Such a CORESET 210 may be referred to as a reduced complexity CORESET 210, where the reduced complexity CORESET 210 may support reduction in complexity of information detection at UE 115-a and may include resource characteristics that are simplified for the reduction in complexity. In some cases, if the CORESET 210 for UE 115-a is not a reduced complexity CORESET 210, UE 115-a may suppress decoding downlink control messages 205 on the CORESET 210.

In one example, base station 105-a configures a CORESET 210-a for UE 115-a (e.g., a low complexity or other type of UE 115) and may configure a CORESET 210-b for UE 115-b (e.g., a different type of UE 115). Base station 105-a indicates respective CORESET configurations to UEs 115-a and 115-b via respective configuration messages 215-a and 215-b (e.g., RRC messages). In some cases, CORESET 210-a may represent a reduced complexity CORESET 210, where a number of RB groups of CORESET 210-a may be limited, or where the CORESET 210-a may be restricted from FDM operations with one or more other signals or channels. UE 115-a may experience decreased delays, decreased power consumption, and general increased communication quality based on the configuration of CORESET 210-a. CORESET 210-b may represent a CORESET 210 that is not reduced in complexity, based on one or more capabilities of UE 115-b.

In some cases, base station 105-a may configure CORESET 210-a without reduced complexity (e.g., without simplification) or without one or more aspects of reduced complexity, such that the CORESET 210-a may not represent a reduced complexity CORESET 210. For example, CORESET 210-a, in some cases, may be configured similarly to CORESET 210-b or may include a number of RB groups that is greater than a number supported by UE 115-a. Additionally, or alternatively, CORESET 210-a may be multiplexed (e.g., FDMed) with one or more other signals or channels. In such cases, for example, UE 115-a determines that CORESET 210-a includes a number of RB groups that is greater than the number supported by UE 115-a or that CORESET 210-a is multiplexed with one or more other signals or channels. Based on determining that CORESET 210-a is configured without one or more aspects of reduced complexity, UE 115-a may determine to suppress decoding downlink control messages 205 on CORESET 210-a.

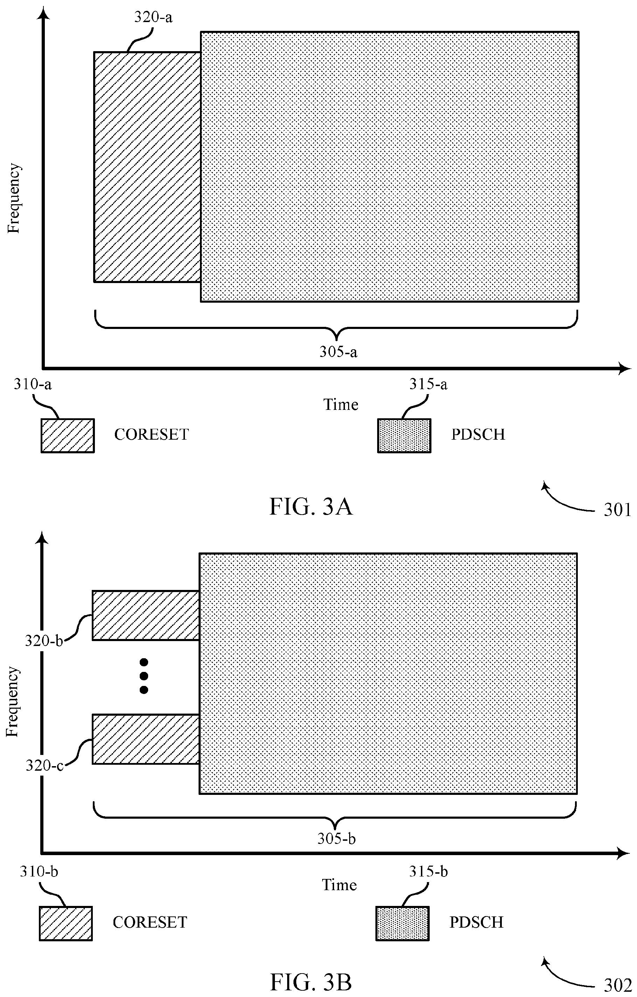

**FIGs. 3A** and **3B** illustrate respective examples of resource configurations 301 and 302 that support control resource configurations in accordance with the invention. In some examples, resource configurations 301 and 302 may implement or be implemented by aspects of wireless communications systems 100 or 200. For example, resource configurations 301 and 302 may each include a CORESET 310 configured by a base station 105 for a UE 115, where the base station 105 and the UE 115 may be examples of corresponding devices described with reference to FIGs. 1 and 2. In some examples, the UE 115 may be a low complexity or other type of UE 115.

Resource configurations 301 and 302 may include examples of a reduced complexity CORESET 310 configured over a slot 305, as described with reference to FIG. 2. For example, the base station 105 may configure CORESETs 310-a and 310-b to include a number of RB groups 320 (e.g., groups of contiguous RBs) that is less than or equal to a number of RB groups 320 supported by the UE 115 (e.g., a threshold number of RB groups 320). For example, the number of RB groups 320 included in CORESETs 310-a and 310-b may be less than four RB groups 320 (e.g., in order to reduce complexity for the UE 115), and in some cases, may be one RB group 320. In some cases, the number of supported RB groups 320 may be based on a type of the UE 115 (e.g., where a type may include a low complexity UE 115) or based on one or more capabilities of the UE 115 (e.g., reported by the UE 115 in a capability message). In some cases, the type of the capability of the UE 115 may be indicated by an index (e.g., that may be signaled to the base station 105 to indicate the type of capability).

Resource configuration 301 may include an example of a reduced complexity CORESET 310-a that includes one RB group 320-a, where the one RB group 320-a may be based on the number of RB groups 320 supported by the UE 115. Resource configuration 302 may, in some cases, include an example of a reduced complexity CORESET 310-b that includes multiple (e.g., two or three) RB groups 320 (e.g., RB group 320-b and any RB groups up to and including 320-c), where the number of RB groups 320 may be based on the number of RB groups 320 supported by the UE 115. The number of RB groups 320 for the CORESET 310 may be based on a capability of the UE 115 or may be predefined (e.g., based on a wireless communications standard) and stored at the base station 105 and/or the UE 115.

In some cases, the UE 115 reports its capability to the base station, for example, by reporting a number of supported RB groups 320 (e.g., a highest number of supported RB groups 320, as indicated by an index). In some cases, the UE 115 may report its type or class to the base station 105 (e.g., as indicated by an index), and the base station 105 may use the type or class of the UE 115 to determine a number of RB groups 320 supported by the UE 115. In some cases, a wireless communications standard may define a number of RB groups 320 (e.g., a highest number of RB groups 320) that may be supported by the class or type of the UE 115.

The UE 115 may be configured to suppress decoding a control channel on a CORESET 310 that includes a number of RB groups 320 that is greater than the number of RB groups 320 supported by the UE 115. For example, in some cases, CORESET 310-b may be configured with five RB groups 320 and the UE 115 may respectively support one, two, or three RB groups 320. Accordingly, the UE 115 may receive a configuration for CORESET 310-b from the base station 105, may determine that the number of RB groups 320 of the CORESET 310-b is greater than one, two, or three RB groups 320, respectively, and may determine to suppress decoding a channel on the CORESET 310-b based on the number of RB groups 320 of the CORESET 310-b being greater than the supported number of RB groups 320.

In some examples, resource configurations 301 and 302 may include examples of reduced complexity CORESETs 310 for a control channel associated with wideband or narrowband reference signals. In some cases, a number of RB groups 320 supported by the UE 115 or a number of RB groups 320 configured by the base station may be different for a CORESET 310 associated with narrowband reference signals than a CORESET 310 associated with wideband reference signals. For example, a wireless standard may configure a number of supported RB groups 320 based on a type of the UE 115 and based on a type of reference signals (e.g., narrowband or wideband). Additionally, or alternatively, a UE 115 may report separate capabilities for numbers of supported RB groups 320 for CORESETs 310 associated with narrowband reference signals or wideband reference signals. In some cases, a number of RB groups 320 supported by the UE 115 or a number of RB groups 320 configured by the base station may be determined using similar methods for a CORESET 310 associated with narrowband reference signals and a CORESET 310 associated with wideband reference signals. For example, a CORESET 310 configured with narrowband reference signals may be associated with a same number of RB groups 320 or a same number of supported RB groups 320 as a CORESET 310 configured with wideband reference signals.

In some cases, the UE 115 may be configured (e.g., in accordance with a wireless communications standard) to use a same number of supported RB groups 320 for a CORESET 310 including narrowband reference signals as a CORESET 310 including wideband reference signals. For example, a UE 115 may determine that a CORESET 310 including narrowband reference signals is associated with a same set of parameters (e.g., a number of RB groups and a number of supported RB groups 320) as a CORESET 310 including wideband reference signals, and may thereby determine the set of parameters (e.g., numbers of RB groups 320 and supported RB groups 320) for the CORESET 310 including narrowband reference signals.

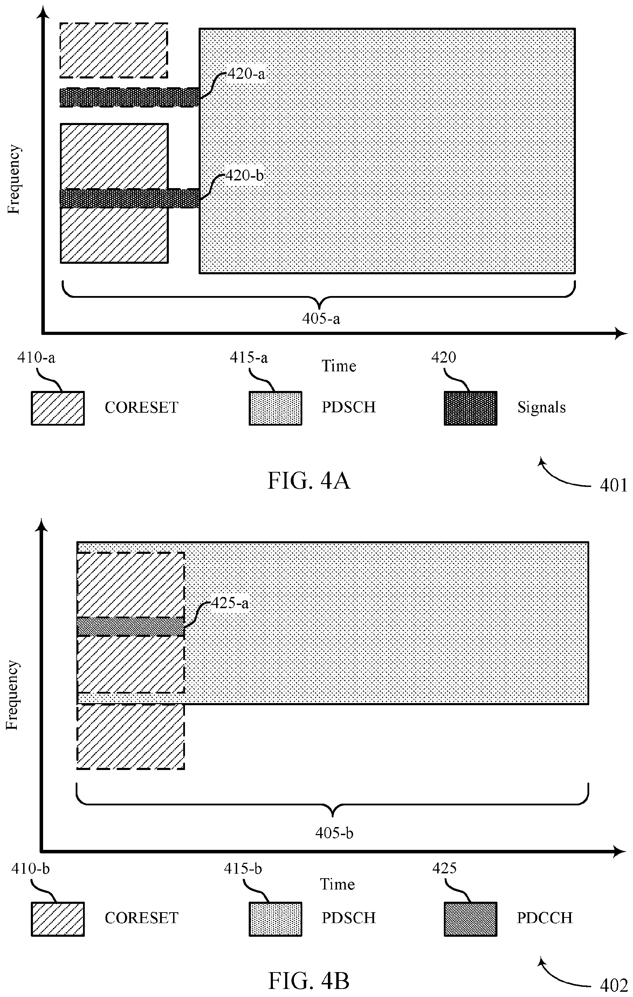

**FIGs. 4A** and **4B** illustrate respective examples of resource configurations 401 and 402 that support control resource configurations useful for understanding the invention . In some examples, resource configurations 401 and 402 may implement aspects of wireless communications systems 100 or 200. For example, resource configurations 401 and 402 may each include a CORESET 410 configured by a base station 105 for a UE 115, where the base station 105 and the UE 115 may be examples of corresponding devices described with reference to FIGs. 1 and 2. In some examples, the UE 115 may be a low complexity or other type of UE 115.

Resource configurations 401 and 402 may include examples of a reduced complexity CORESET 410 configured over a slot 405, as described with reference to FIG. 2. In some cases, the base station 105 may configure CORESETs 410-a and 410-b to avoid multiplexing symbols (e.g., any symbols) of the CORESETs 410 with other signals 420 or channels (e.g., any other signals or channels, such as a physical downlink shared channel (PDSCH) 415). The base station 105 may avoid FDM of a control channel (e.g., a PDCCH 425 on a CORESET 410) and other signals 420, such as an SSB, a physical broadcast channel (PBCH), CRS, channel state information (CSI), or any combination thereof. The base station 105 may also avoid FDM of a control channel (e.g., a PDCCH 425 on a CORESET 410) and other channels, such as a PDSCH 415.

The UE 115 may indicate a multiplexing capability (e.g., FDM capability) to the base station 105, where the configuration of the reduced complexity CORESET 410 may be based on the multiplexing capability. The UE 115 may transmit an explicit indication of its multiplexing capability to the base station 105, or may additionally, or alternatively, transmit an indication of the type or class of the UE 115 (e.g., indicated by an index), which the base station 105 may use to determine the multiplexing capability. In some cases, a wireless communications standard may define a multiplexing capability that may be supported by the class or type of the UE 115.

If the multiplexing capability indicates that the UE 115 is unable to decode a control channel that is multiplexed with one or more other signals 420 or channels (e.g., if UE 115 is a low complexity UE 115), the base station 105 may, in some cases, configure the CORESET 410 to avoid sharing one or more symbols of the CORESET 410 with the one or more other signals 420 or channels. The UE 115 may additionally, or alternatively, be configured to suppress decoding a control channel (e.g., a PDCCH 425) that is multiplexed (e.g., partially or completely) with one or more other signals 420 or channels.

For example, if the base station 105 configures a signal 420-a or 420-b that shares one or more symbols with CORESET 410-a, the UE 115 may determine that the one or more symbols are shared and may determine not to decode a control channel on the CORESET 410-a, based on the shared symbol(s) and on the multiplexing capability of the UE 115. Similarly, if the base station 105 configures a PDSCH 415-b that shares one or more symbols with CORESET 410-b, the UE 115 may determine that the one or more symbols are shared and may determine not to decode a control channel (e.g., a PDCCH 425-a) on the CORESET 410-b, based on the shared symbol(s) and on the multiplexing capability of the UE 115. In some cases, if the base station 105 determines that the UE 115 does not support multiplexing and that a CORESET 410 shares one or more symbols with one or more other signals or control channels, the base station 105 may delay transmission of a PDCCH 425 or a control message on the CORESET 410.

In some cases, the PDSCH 415-b may be scheduled for the UE 115 by a control channel (e.g., control message) on another CORESET 410 previous to the UE 115 determining that the one or more symbols are shared. In some cases, the PDSCH 415-b may be rate matched around CORESET 410-b, and in some cases, the PDSCH 415-b may be rate matched around a scheduling downlink control information (DCI) or PDCCH 425-a. The PDSCH 415-b may, in some examples, share a same active BWP with the CORESET 410-b.

If the multiplexing capability indicates that the UE 115 is able to decode a control channel that is multiplexed with one or more other signals 420 or channels, the base station 105 may, in some cases, configure the CORESET 410 to share one or more symbols (e.g., up to a threshold number of symbols for the UE 115) of the CORESET 410 and the one or more other signals 420 or channels. The UE 115 may additionally, or alternatively, be configured to decode a control channel (e.g., a PDCCH 425) that is multiplexed (e.g., partially or completely) with one or more other signals 420 or channels (e.g., multiplexed up to a threshold number of symbols).

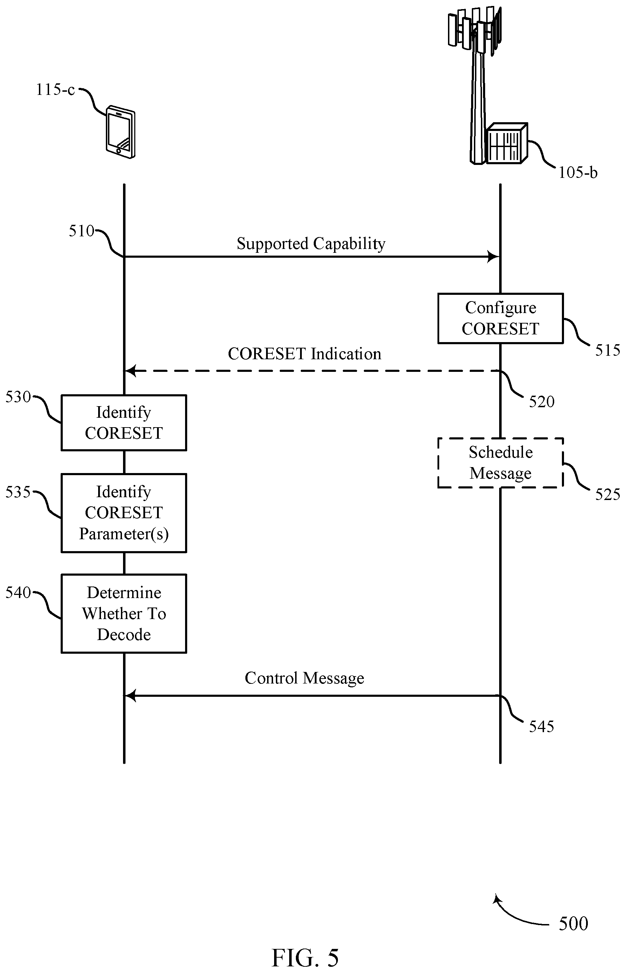

**FIG. 5** illustrates an example of a process flow 500 that supports control resource configurations in accordance with the invention. In some examples, process flow 500 may implement or be implemented by aspects of wireless communications systems 100 or 200. Additionally, process flow 500 may implement or be implemented by aspects of resource configurations 301, 302, 401, or 402. Process flow 500 may be implemented by a UE 115-c and a base station 105-b, which may be examples of a UE 115 and a base station 105 described with reference to FIGs. 1-4. Base station 105-b may configure UE 115-c with a CORESET for control channel transmissions. In some cases, UE 115-c may represent a low complexity UE 115.

UE 115-c may implement aspects of process flow 500 in order to identify a CORESET configured for the UE 115-c and to determine whether to decode a control message or control channel on the CORESET, as described with reference to FIGs. 2-4. Similarly, base station 105-b may implement aspects of process flow 500 to configure a CORESET for UE 115-c, as described with reference to FIGs. 2-4.

In the following description of process flow 500, the operations between UE 115-c and base station 105-b may be transmitted in a different order than the order shown, or the operations performed by UE 115-c or base station 105-b may be performed in different orders or at different times. Specific operations may also be left out of process flow 500, or other operations may be added to process flow 500. Although UE 115-c and base station 105-b are shown performing the operations of process flow 500, some aspects of some operations may also be performed by one or more other wireless devices.

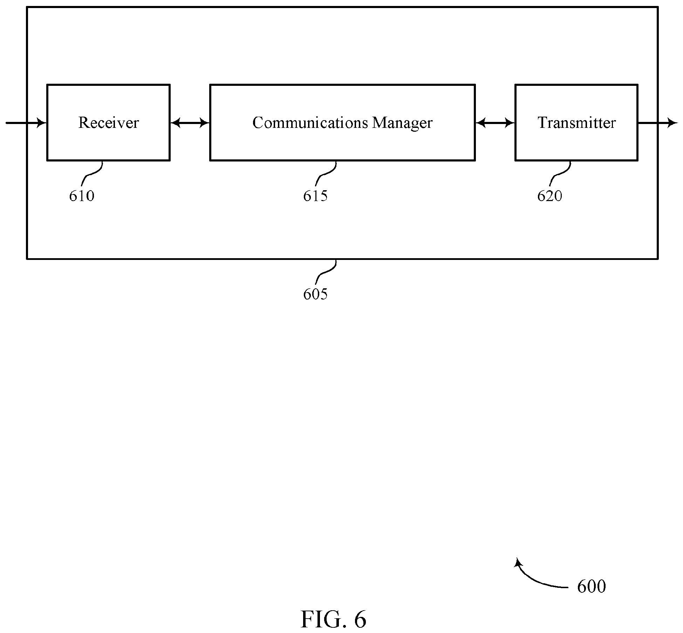

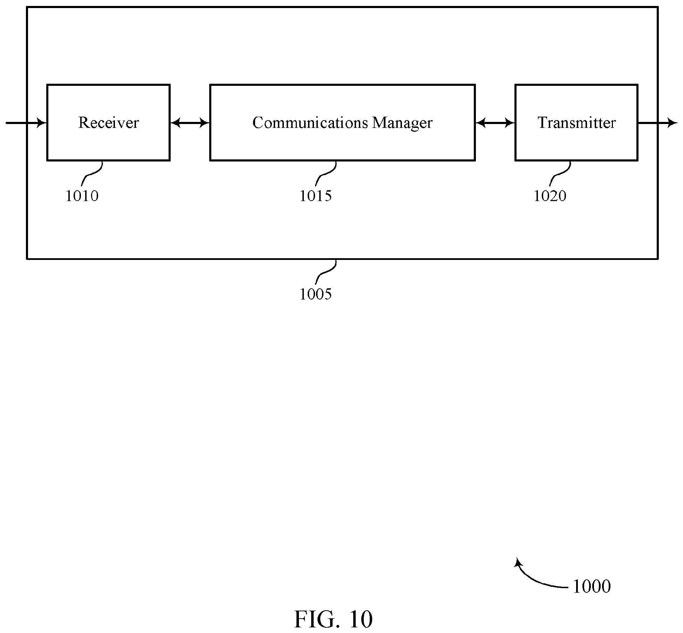

At 510, UE 115-c transmits, to base station 105-b, an indication of a supported CORESET capability. A CORESET capability may include, but may not be limited to, a number of RB groups supported by UE 115-c for a control channel, a multiplexing capability supported by UE 115-c for a control channel, or a combination thereof. In some cases, UE 115-c may transmit an explicit indication of the number of supported RB groups or the multiplexing capability. In some cases, UE 115-c may transmit an indication of a type or class of UE 115-c (e.g., indicated by an index), which base station 105-b may use to determine the supported CORESET capability. UE 115-c may transmit the indication of the supported CORESET capability using a capability indication component as described herein with reference to FIGs. 6-9, which may be coupled with or be an example of a transmitter or a transceiver. Base station 105-b may receive the indication using a capability reception component as described herein with reference to FIGs. 10-13, which may be coupled with or be an example of a receiver or a transceiver.

At 515, base station 105-b may configure a CORESET for UE 115-c based on the supported CORESET capability of UE 115-c (e.g., a supported number of RB groups or a multiplexing capability). For example, base station 105-b may configure the CORESET for UE 115-c to include a number of RB groups based on the supported number of RB groups. Additionally, or alternatively, base station 105-b may configure the CORESET for UE 115-c to avoid multiplexing with one or more other signals or other channels in any symbol or a quantity of symbols of the CORESET. Base station 105-b may configure the CORESET using a CORESET configuration component as described herein with reference to FIGs. 10-13, which may in some cases be included in code that is executed by a processor.

Base station 105-b may also receive a supported CORESET capability for another UE 115 and configure a CORESET for the other UE 115 based on the supported CORESET capability for the other UE 115. In some cases, the other UE 115 may be a different type of UE 115 than UE 115-c (e.g., may be a non-low complexity UE 115), and base station 105-b may configure the respective CORESETs accordingly. For example, base station 105-b may configure the CORESET for UE 115-c to be a reduced complexity CORESET and may configure the CORESET for the other UE 115 without reduced complexity or one or more aspects thereof. Base station 105-b may configure the CORESET for the other UE 115 using a CORESET configuration component as described herein with reference to FIGs. 10-13, which may in some cases be included in code that is executed by a processor.

At 520base station 105-b transmits, to UE 115-c, an indication of the configured CORESET. Base station 105-b transmits the CORESET configuration to UE 115-c, for example, via an RRC message. The indication may, for example, be transmitted as part of an RRC procedure or an initial configuration procedure. In some cases, the indication may include an indication of one or more parameters of the CORESET, such as a number of RB groups. Base station 105-b may transmit the indication using a transmitter or a transceiver as described herein.

At 525, base station 105-b may, in some cases, schedule a message carried via one or more other channels for UE 115-c, based on the multiplexing capability of UE 115-c. For example, if the multiplexing capability of UE 115-c indicates that UE 115-c does not receive multiplexed signals or channels, base station 105-b may schedule the message such that the message does not overlap with the CORESET for UE 115-c (e.g., with any symbol of the CORESET). If the multiplexing capability of UE 115-c indicates that UE 115-c may receive multiplexed signals or channels, base station 105-b may schedule the message such that the message may overlap with one or more symbols of the CORESET for UE 115-c. Base station 105-b may schedule the message using a message scheduling component as described herein with reference to FIGs. 10-13, which may in some cases be included in code that is executed by a processor.

At 530, UE 115-c may identify the CORESET configured by base station 105-b, where the CORESET may be associated with a control channel. In some cases, UE 115-c may identify the CORESET based on the indication from base station 105-b. In some cases, UE 115-c may identify the CORESET based on one or more tables or indices associated with UE 115-c, base station 105-b, the control channel, or any combination thereof. UE 115-c may identify the CORESET when configured with the CORESET or when preparing to monitor the CORESET. UE 115-c may identify the CORESET using a CORESET identification component as described herein with reference to FIGs. 6-9, which may in some cases be included in code that is executed by a processor.

At 535, UE 115-c identifies one or more parameters of the CORESET. The one or more parameters may include a number of RB groups of the CORESET. Additionally, or alternatively, the one or more parameters may include a number of symbols that include a message carried via one or more other channels multiplexed in frequency with the CORESET. UE 115-c may compare the one or more parameters of the CORESET with one or more corresponding capabilities of the UE 115-c. UE 115-c may identify the one or more CORESET parameters using a CORESET characteristic identification component as described herein with reference to FIGs. 6-9, which may in some cases be included in code that is executed by a processor.

At 540, UE 115-c determines whether to decode one or more candidates of a search space for the CORESET or whether to decode a control message on the CORESET. UE 115-c may determine whether to decode the one or more search space candidates based on the multiplexing capability of UE 115-c and whether the message carried via the one or more other channels overlaps with any symbol of the CORESET. For example, if the multiplexing capability of UE 115-c is such that UE 115-c is not configured to receive multiplexed transmissions in the CORESET (e.g., in any symbol of the CORESET) and the message overlaps with at least one symbol of the CORESET, UE 115-c may determine to suppress decoding the one or more search space candidates. Similarly, if the supported number of RB groups (e.g., supported by UE 115-c) is lower than the number of RB groups of the CORESET, UE 115-c may determine to suppress decoding a control message on the CORESET. UE 115-c may determine whether to decode the one or more search space candidates or the control message using a decoding determination component as described herein with reference to FIGs. 6-9, which may in some cases be included in code that is executed by a processor.

At 545, base station 105-b may transmit, to UE 115-c and on the CORESET, a control message. In some cases, the control message may represent or be associated with a control channel (e.g., a PDCCH). UE 115-c may decode the control message based on the determination of whether to decode the one or more search candidates or based on the determination of whether to decode the control message. For example, if the message does not overlap with a symbol of the CORESET, or if the number of RB groups of the CORESET is less than or equal to the supported number of RB groups, UE 115-c may decode the control message. Base station 105-b may transmit the control message using a control message transmission component as described herein with reference to FIGs. 10-13, which may be coupled with or be an example of a transmitter or a transceiver. UE 115-c may receive the control message using a decoding component as described herein with reference to FIGs. 6-9, which may be coupled with or be an example of a receiver or a transceiver.

**FIG. 6** shows a block diagram 600 of a device 605 that supports control resource configurations in accordance with aspects of the present disclosure. The device 605 may be an example of aspects of a UE 115 as described herein. The device 605 may include a receiver 610, a communications manager 615, and a transmitter 620. The device 605 may also include a processor. Each of these components may be in communication with one another (e.g., via one or more buses).

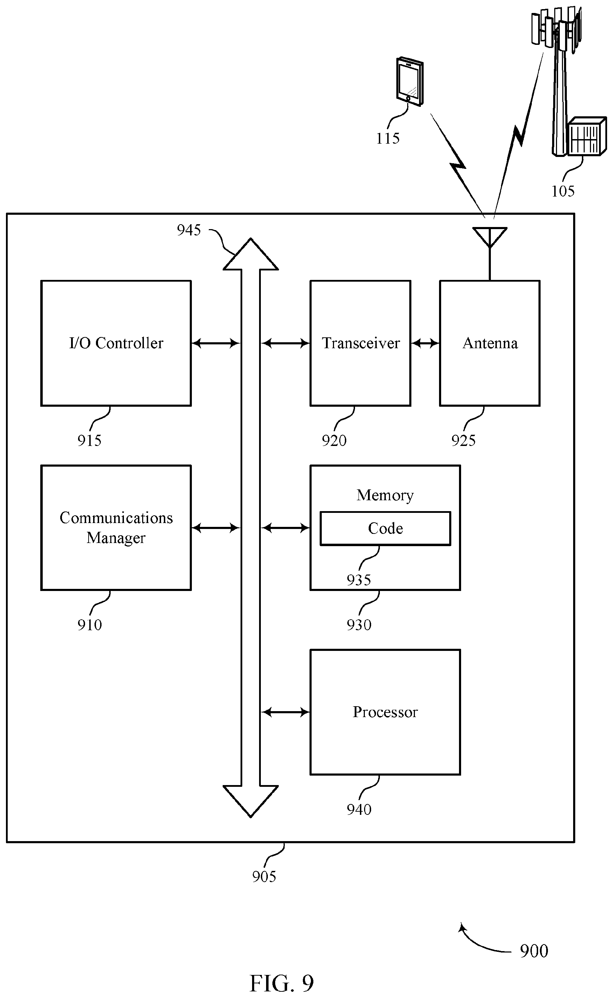

The receiver 610 may receive information such as packets, user data, or control information associated with various information channels (e.g., control channels, data channels, and information related to control resource configurations, etc.). Information may be passed on to other components of the device 605. The receiver 610 may be an example of aspects of the transceiver 920 described with reference to FIG. 9. The receiver 610 may utilize a single antenna or a set of antennas.

The communications manager 615 may transmit, to a base station, an indication of a supported quantity of RB groups for a control channel, identify a CORESET associated with the control channel, the CORESET including one or more RB groups, identify a quantity of the one or more RB groups based on identifying the CORESET, and determine whether to decode a control message on the CORESET based on the supported quantity of RB groups and the quantity of the one or more RB groups. The communications manager 615 may also transmit, to a base station, an indication of a multiplexing capability, identify whether one or more symbols associated with a CORESET including a control channel include a message carried via one or more other channels multiplexed in frequency with the CORESET, and determine whether to decode one or more candidates of a search space for the CORESET based on the multiplexing capability and whether the one or more symbols include the message. The communications manager 615 may be an example of aspects of the communications manager 910 described herein.

The communications manager 615, or its sub-components, may be implemented in hardware, code (e.g., software or firmware) executed by a processor, or any combination thereof. If implemented in code executed by a processor, the functions of the communications manager 615, or its sub-components may be executed by a general-purpose processor, a digital signal processor (DSP), an application-specific integrated circuit (ASIC), a field-programmable gate array (FPGA) or other programmable logic device, discrete gate or transistor logic, discrete hardware components, or any combination thereof designed to perform the functions described in the present disclosure.

The communications manager 615, or its sub-components, may be physically located at various positions, including being distributed such that portions of functions are implemented at different physical locations by one or more physical components. In some examples, the communications manager 615, or its sub-components, may be a separate and distinct component in accordance with various aspects of the present disclosure. In some examples, the communications manager 615, or its sub-components, may be combined with one or more other hardware components, including but not limited to an input/output (I/O) component, a transceiver, a network server, another computing device, one or more other components described in the present disclosure, or a combination thereof in accordance with various aspects of the present disclosure.

The transmitter 620 may transmit signals generated by other components of the device 605. In some examples, the transmitter 620 may be collocated with a receiver 610 in a transceiver module. For example, the transmitter 620 may be an example of aspects of the transceiver 920 described with reference to FIG. 9. The transmitter 620 may utilize a single antenna or a set of antennas.

The actions performed by the communications manager 615, among other examples herein, as described herein may be implemented to realize one or more potential advantages. For example, communications manager 615 may decrease communication latency, and increase available power at a wireless device (e.g., a UE 115) by enabling a reduced complexity CORESET configuration. The reduced complexity CORESET configuration may reduce processing time at a device or reduce energy consumption (or any combination thereof) compared to other systems and techniques, for example, that do not include a reduced complexity CORESET configuration. Accordingly, communications manager 615 may save energy and increase battery life at a wireless device (e.g., a UE 115) by strategically reducing an amount of processing performed by a wireless device (e.g., a UE 115).

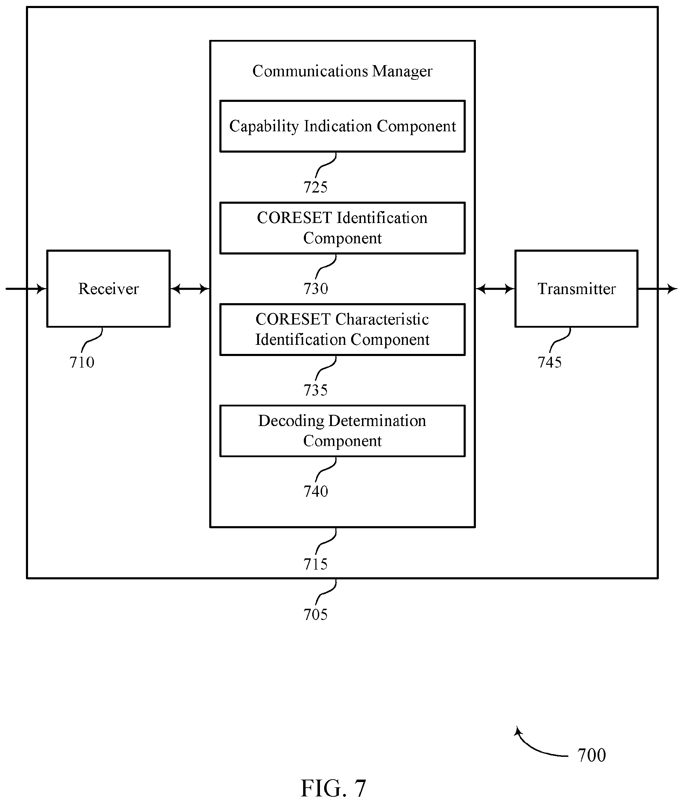

**FIG. 7** shows a block diagram 700 of a device 705 that supports control resource configurations in accordance with aspects of the present disclosure. The device 705 may be an example of aspects of a device 605, or a UE 115 as described herein. The device 705 may include a receiver 710, a communications manager 715, and a transmitter 745. The device 705 may also include a processor. Each of these components may be in communication with one another (e.g., via one or more buses).

The receiver 710 may receive information such as packets, user data, or control information associated with various information channels (e.g., control channels, data channels, and information related to control resource configurations, etc.). Information may be passed on to other components of the device 705. The receiver 710 may be an example of aspects of the transceiver 920 described with reference to FIG. 9. The receiver 710 may utilize a single antenna or a set of antennas.

The communications manager 715 may be an example of aspects of the communications manager 615 as described herein. The communications manager 715 may include a capability indication component 725, a CORESET identification component 730, a CORESET characteristic identification component 735, and a decoding determination component 740. The communications manager 715 may be an example of aspects of the communications manager 910 described herein.

The capability indication component 725 may transmit, to a base station, an indication of a supported quantity of RB groups for a control channel. The capability indication component 725 may additionally, or alternatively, transmit, to the base station, an indication of a multiplexing capability.

The CORESET identification component 730 may identify a CORESET associated with the control channel, the CORESET including one or more RB groups.

The CORESET characteristic identification component 735 may identify a quantity of the one or more RB groups based on identifying the CORESET. The CORESET characteristic identification component 735 may identify whether one or more symbols associated with a CORESET including a control channel include a message carried via one or more other channels multiplexed in frequency with the CORESET.

The decoding determination component 740 may determine whether to decode a control message on the CORESET based on the supported quantity of RB groups and the quantity of the one or more RB groups. The decoding determination component 740 may determine whether to decode one or more candidates of a search space for the CORESET based on the multiplexing capability and whether the one or more symbols include the message.

The transmitter 745 may transmit signals generated by other components of the device 705. In some examples, the transmitter 745 may be collocated with a receiver 710 in a transceiver module. For example, the transmitter 745 may be an example of aspects of the transceiver 920 described with reference to FIG. 9. The transmitter 745 may utilize a single antenna or a set of antennas.

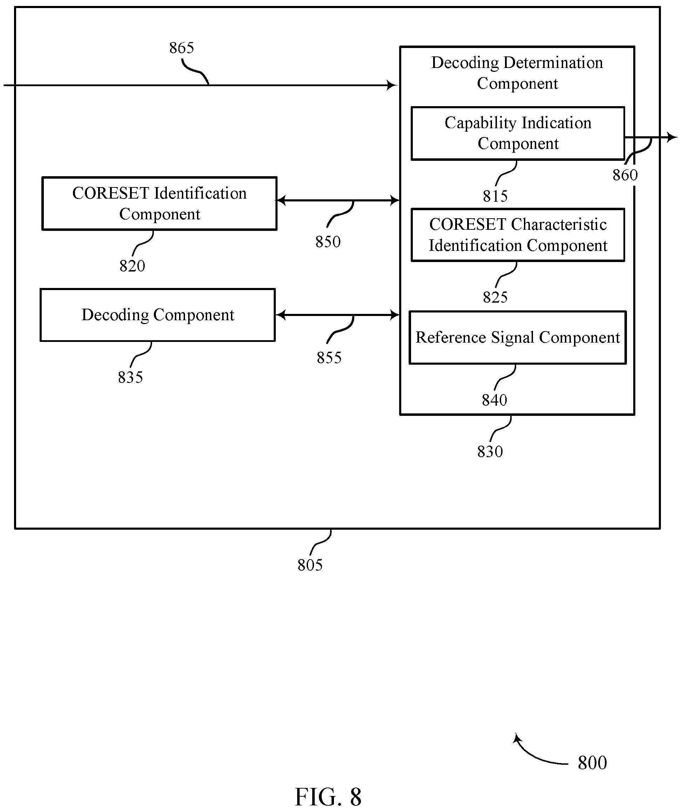

A processor of a wireless device (e.g., controlling the receiver 710, the transmitter 745, or the transceiver 920 as described with reference to FIG. 9) may increase communication reliability and accuracy by decreasing communication delays and increasing available power. The reduced delays may reduce energy consumption (e.g., via implementation of system components described with reference to FIG. 8) compared to other systems and techniques, for example, that do not include a reduced complexity CORESET configuration, which may increase processing or signaling overhead and power consumption. Further, the processor of the UE 115 may identify one or more aspects of a CORESET configuration or a UE capability to perform the processes described herein. The processor of the wireless device may use the CORESET configuration to perform one or more actions that may result in lower delays and power consumption, as well as save power and increase battery life at the wireless device (e.g., by monitoring a reduced complexity CORESET), among other benefits.

**FIG. 8** shows a block diagram 800 of a communications manager 805 that supports control resource configurations in accordance with aspects of the present disclosure. The communications manager 805 may be an example of aspects of a communications manager 615, a communications manager 715, or a communications manager 910 described herein. The communications manager 805 may include a capability indication component 815, a CORESET identification component 820, a CORESET characteristic identification component 825, a decoding determination component 830, a decoding component 835, and a reference signal component 840. Each of these modules may communicate, directly or indirectly, with one another (e.g., via one or more buses).

The capability indication component 815 may transmit, to a base station, an indication 860 of a capability of the UE. For example, the capability indication component 815 may transmit, to the base station, an indication 860 of a supported quantity of RB groups for a control channel. Additionally, or alternatively, the capability indication component 815 may transmit, to the base station, an indication 860 of a multiplexing capability. In some examples, the capability indication component 815 may transmit a type of the UE, the type associated with the supported quantity of RB groups. In some examples, the capability indication component 815 may transmit a capability of the UE, the capability including the supported quantity of RB groups. In some examples, the capability indication component 815 may transmit a type of the UE, the type associated with the multiplexing capability. In some examples, the capability indication component 815 may transmit a capability of the UE, the capability including the multiplexing capability.

In some cases, the supported quantity of RB groups is less than four. In some cases, the supported quantity of RB groups is one. In some cases, a type of the UE is associated with a low-complexity mode of operation. In some cases, the multiplexing capability is a frequency division multiplexing capability.

The CORESET identification component 820 may identify a CORESET associated with the control channel, the CORESET including one or more RB groups. In some cases, the CORESET identification component 820 may exchange a CORESET configuration 850 or related information with the decoding determination component, where the decoding determination component may use the CORESET configuration 850 to identify one or more characteristics of the CORESET (e.g., using the CORESET characteristic identification component).

The CORESET characteristic identification component 825 may identify a quantity of the one or more RB groups based on identifying the CORESET. In some examples, the CORESET characteristic identification component 825 may identify whether one or more symbols associated with a CORESET including a control channel include a message carried via one or more other channels multiplexed in frequency with the CORESET.

The decoding determination component 830 may determine whether to decode a control message on the CORESET based on the supported quantity of RB groups and the quantity of the one or more RB groups. In some examples, the decoding determination component 830 may determine whether to decode one or more candidates of a search space for the CORESET based on the multiplexing capability and whether the one or more symbols include the message.

In some examples, the decoding determination component 830 may determine that the supported quantity of RB groups is less than the quantity of the one or more RB groups. In some examples, the decoding determination component 830 may determine that the supported quantity of RB groups is greater than or equal to the quantity of the one or more RB groups. In some examples, the decoding determination component 830 may determine that one or more symbols associated with the CORESET include the message.

In some examples, the decoding determination component 830 may receive a control message 865 previous to determining whether to decode the one or more candidates of the search space, the control message 865 received on an initial CORESET and scheduling one or more transmissions associated with the PDSCH.

In some examples, the decoding determination component 830 may fail to detect that one or more symbols associated with the CORESET include the message. In some cases, the one or more other channels include CSI, CRS, an SSB, a PBCH, a PDSCH, or any combination thereof. In some cases, the PDSCH is associated with a same bandwidth part as the CORESET. The decoding determination component 830 may exchange information with the decoding component 835 regarding the determination of whether to decode the control message 865 or the one or more candidates of the search space, which may support decoding of the control message 865 or the one or more candidates of the search space.

The decoding component 835 may suppress decoding of the control message 865 based on determining that the supported quantity of RB groups is less than the quantity of the one or more RB groups. In some examples, the decoding component 835 may decode the control message 865 based on determining that the supported quantity of RB groups is greater than or equal to the quantity of the one or more RB groups. In some cases, the decoding component 835 may exchange determination information 855 (e.g., the quantity of the one or more RB groups) or related information with the decoding determination component 830, where the decoding determination component 830 may use the determination information 855 to identify one or more characteristics of the CORESET (e.g., using the CORESET characteristic identification component).

In some examples, the decoding component 835 may suppress decoding of the one or more candidates of the search space based on determining that the one or more symbols associated with the CORESET include the message. In some examples, the decoding component 835 may decode the one or more candidates of the search space based on failing to detect that one or more symbols associated with the CORESET include the message. In some cases, the decoding component 835 may exchange determination information 855 (e.g., the one or more symbols associated with the CORESET that include the message) or related information with the decoding determination component 830, where the decoding determination component 830 may use the determination information 855 to identify one or more characteristics of the CORESET (e.g., using the CORESET characteristic identification component).

The reference signal component 840 may determine that the CORESET includes one or more wideband reference signals, where the supported quantity of RB groups is based on the one or more wideband reference signals. In some examples, the reference signal component 840 may determine that the CORESET includes one or more narrowband reference signals, where the supported quantity of RB groups is based on the one or more narrowband reference signals. In some cases, the supported quantity of RB groups is independent of a supported quantity of RB groups associated with one or more wideband reference signals. In some cases, the supported quantity of RB groups is based on a supported quantity of RB groups associated with one or more wideband reference signals.

**FIG. 9** shows a diagram of a system 900 including a device 905 that supports control resource configurations in accordance with aspects of the present disclosure. The device 905 may be an example of or include the components of device 605, device 705, or a UE 115 as described herein. The device 905 may include components for bi-directional voice and data communications including components for transmitting and receiving communications, including a communications manager 910, an I/O controller 915, a transceiver 920, an antenna 925, memory 930, and a processor 940. These components may be in electronic communication via one or more buses (e.g., bus 945).

The communications manager 910 may transmit, to a base station, an indication of a supported quantity of RB groups for a control channel, identify a CORESET associated with the control channel, the CORESET including one or more RB groups, identify a quantity of the one or more RB groups based on identifying the CORESET, and determine whether to decode a control message on the CORESET based on the supported quantity of RB groups and the quantity of the one or more RB groups. The communications manager 910 may also transmit, to a base station, an indication of a multiplexing capability, identify whether one or more symbols associated with a CORESET including a control channel include a message carried via one or more other channels multiplexed in frequency with the CORESET, and determine whether to decode one or more candidates of a search space for the CORESET based on the multiplexing capability and whether the one or more symbols include the message.

The I/O controller 915 may manage input and output signals for the device 905. The I/O controller 915 may also manage peripherals not integrated into the device 905. In some cases, the I/O controller 915 may represent a physical connection or port to an external peripheral. In some cases, the I/O controller 915 may utilize an operating system such as iOS^{®}, ANDROID^{®}, MS-DOS^{®}, MS-WINDOWS^{®}, OS/2^{®}, UNIX^{®}, LINUX^{®}, or another known operating system. In other cases, the I/O controller 915 may represent or interact with a modem, a keyboard, a mouse, a touchscreen, or a similar device. In some cases, the I/O controller 915 may be implemented as part of a processor. In some cases, a user may interact with the device 905 via the I/O controller 915 or via hardware components controlled by the I/O controller 915.

The transceiver 920 may communicate bi-directionally, via one or more antennas, wired, or wireless links as described above. For example, the transceiver 920 may represent a wireless transceiver and may communicate bi-directionally with another wireless transceiver. The transceiver 920 may also include a modem to modulate the packets and provide the modulated packets to the antennas for transmission, and to demodulate packets received from the antennas.

In some cases, the wireless device may include a single antenna 925. However, in some cases the device may have more than one antenna 925, which may be capable of concurrently transmitting or receiving multiple wireless transmissions.

The memory 930 may include random access memory (RAM) and read only memory (ROM). The memory 930 may store computer-readable, computer-executable code 935 including instructions that, when executed, cause the processor to perform various functions described herein. In some cases, the memory 930 may contain, among other things, a basic I/O system (BIOS) which may control basic hardware or software operation such as the interaction with peripheral components or devices.

The processor 940 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 940 may be configured to operate a memory array using a memory controller. In other cases, a memory controller may be integrated into the processor 940. The processor 940 may be configured to execute computer-readable instructions stored in a memory (e.g., the memory 930) to cause the device 905 to perform various functions (e.g., functions or tasks supporting control resource configurations).

The code 935 may include instructions to implement aspects of the present disclosure, including instructions to support wireless communications. The code 935 may be stored in a non-transitory computer-readable medium such as system memory or other type of memory. In some cases, the code 935 may not be directly executable by the processor 940 but may cause a computer (e.g., when compiled and executed) to perform functions described herein.

**FIG. 10** shows a block diagram 1000 of a device 1005 that supports control resource configurations in accordance with aspects of the present disclosure. The device 1005 may be an example of aspects of a base station 105 as described herein. The device 1005 may include a receiver 1010, a communications manager 1015, and a transmitter 1020. The device 1005 may also include a processor. Each of these components may be in communication with one another (e.g., via one or more buses).

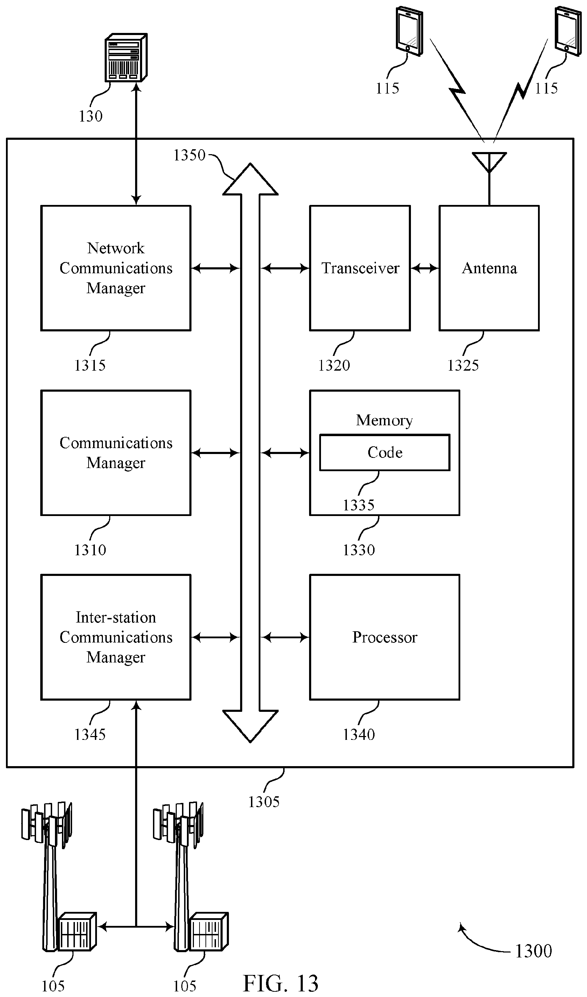

The receiver 1010 may receive information such as packets, user data, or control information associated with various information channels (e.g., control channels, data channels, and information related to control resource configurations, etc.). Information may be passed on to other components of the device 1005. The receiver 1010 may be an example of aspects of the transceiver 1320 described with reference to FIG. 13. The receiver 1010 may utilize a single antenna or a set of antennas.

The communications manager 1015 may receive, from a first UE, an indication of a first supported quantity of RB groups for a control channel, receive, from a second UE, an indication of a second supported quantity of RB groups for the control channel, configure, based on the first supported quantity of RB groups, a first quantity of RB groups for a first CORESET associated with the control channel, configure, based on the second supported quantity of RB groups, a second quantity of RB groups for a second CORESET associated with the control channel, and transmit a control message to the first UE. The communications manager 1015 may also receive, from a UE, an indication of a multiplexing capability of the UE, schedule a message carried via one or more other channels for the UE based on the multiplexing capability and a set of symbols associated with a CORESET configured for the UE, and transmit a control message to the UE on the CORESET. The communications manager 1015 may be an example of aspects of the communications manager 1310 described herein.

The communications manager 1015, or its sub-components, may be implemented in hardware, code (e.g., software or firmware) executed by a processor, or any combination thereof. If implemented in code executed by a processor, the functions of the communications manager 1015, or its sub-components may be executed by a general-purpose processor, a DSP, an ASIC, an FPGA or other programmable logic device, discrete gate or transistor logic, discrete hardware components, or any combination thereof designed to perform the functions described in the present disclosure.

The communications manager 1015, or its sub-components, may be physically located at various positions, including being distributed such that portions of functions are implemented at different physical locations by one or more physical components. In some examples, the communications manager 1015, or its sub-components, may be a separate and distinct component in accordance with various aspects of the present disclosure. In some examples, the communications manager 1015, or its sub-components, may be combined with one or more other hardware components, including but not limited to an I/O component, a transceiver, a network server, another computing device, one or more other components described in the present disclosure, or a combination thereof in accordance with various aspects of the present disclosure.

The transmitter 1020 may transmit signals generated by other components of the device 1005. In some examples, the transmitter 1020 may be collocated with a receiver 1010 in a transceiver module. For example, the transmitter 1020 may be an example of aspects of the transceiver 1320 described with reference to FIG. 13. The transmitter 1020 may utilize a single antenna or a set of antennas.

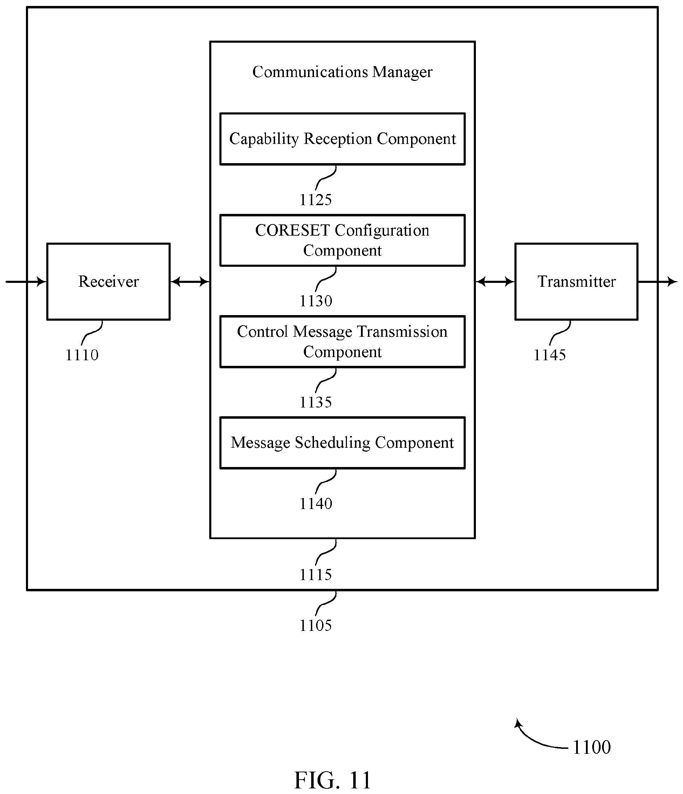

**FIG. 11** shows a block diagram 1100 of a device 1105 that supports control resource configurations in accordance with aspects of the present disclosure. The device 1105 may be an example of aspects of a device 1005, or a base station 105 as described herein. The device 1105 may include a receiver 1110, a communications manager 1115, and a transmitter 1145. The device 1105 may also include a processor. Each of these components may be in communication with one another (e.g., via one or more buses).

The receiver 1110 may receive information such as packets, user data, or control information associated with various information channels (e.g., control channels, data channels, and information related to control resource configurations, etc.). Information may be passed on to other components of the device 1105. The receiver 1110 may be an example of aspects of the transceiver 1320 described with reference to FIG. 13. The receiver 1110 may utilize a single antenna or a set of antennas.

The communications manager 1115 may be an example of aspects of the communications manager 1015 as described herein. The communications manager 1115 may include a capability reception component 1125, a CORESET configuration component 1130, a control message transmission component 1135, and a message scheduling component 1140. The communications manager 1115 may be an example of aspects of the communications manager 1310 described herein.

The capability reception component 1125 may receive, from a first UE, an indication of a first supported quantity of RB groups for a control channel and receive, from a second UE, an indication of a second supported quantity of RB groups for the control channel. The capability reception component 1125 may receive, from a UE, an indication of a multiplexing capability of the UE.

The CORESET configuration component 1130 may configure, based on the first supported quantity of RB groups, a first quantity of RB groups for a first CORESET associated with the control channel and configure, based on the second supported quantity of RB groups, a second quantity of RB groups for a second CORESET associated with the control channel.

The control message transmission component 1135 may transmit a control message to the first UE. The control message transmission component 1135 may transmit a control message to the UE on the CORESET.

The message scheduling component 1140 may schedule a message carried via one or more other channels for the UE based on the multiplexing capability and a set of symbols associated with a CORESET configured for the UE.

The transmitter 1145 may transmit signals generated by other components of the device 1105. In some examples, the transmitter 1145 may be collocated with a receiver 1110 in a transceiver module. For example, the transmitter 1145 may be an example of aspects of the transceiver 1320 described with reference to FIG. 13. The transmitter 1145 may utilize a single antenna or a set of antennas.

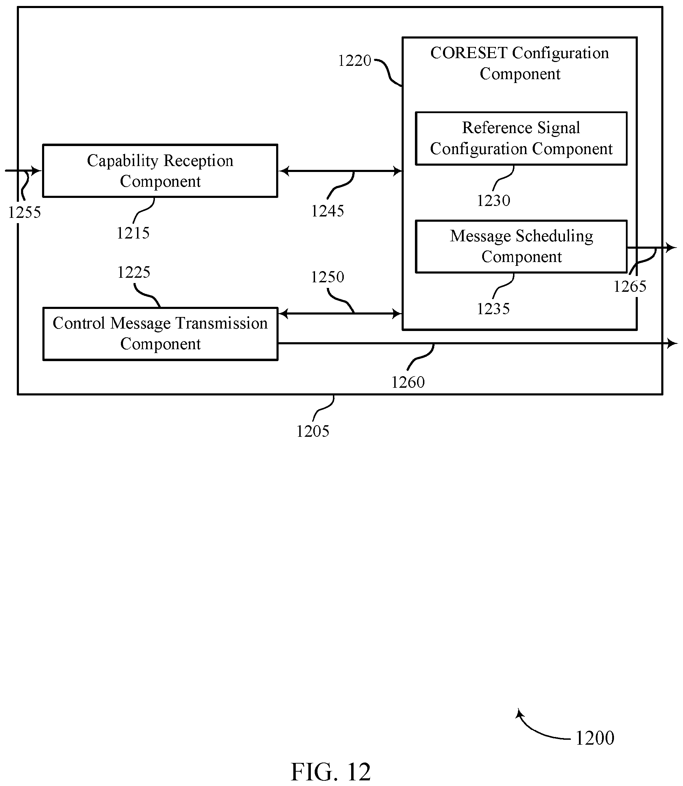

**FIG. 12** shows a block diagram 1200 of a communications manager 1205 that supports control resource configurations in accordance with aspects of the present disclosure. The communications manager 1205 may be an example of aspects of a communications manager 1015, a communications manager 1115, or a communications manager 1310 described herein. The communications manager 1205 may include a capability reception component 1215, a CORESET configuration component 1220, a control message transmission component 1225, a reference signal configuration component 1230, and a message scheduling component 1235. Each of these modules may communicate, directly or indirectly, with one another (e.g., via one or more buses).

The capability reception component 1215 may receive, from a first UE, an indication 1255 of a capability of the first UE. For example, the capability reception component 1215 may receive, from the first UE, an indication 1255 of a first supported quantity of RB groups for a control channel. In some examples, the capability reception component 1215 may receive, from a second UE, an indication of a second supported quantity of RB groups for the control channel. In some examples, the capability reception component 1215 may receive, from a UE, an indication 1255 of a multiplexing capability of the UE.

In some examples, the capability reception component 1215 may receive a type of the first UE, the type associated with the first supported quantity of RB groups. In some examples, the capability reception component 1215 may receive a capability of the first UE, the capability including the first supported quantity of RB groups. In some examples, the capability reception component 1215 may receive a type of the UE, the type associated with the multiplexing capability. In some examples, the capability reception component 1215 may receive a capability of the UE, the capability including the multiplexing capability.

In some examples, the capability reception component 1215 may determine that the first multiplexing capability indicates that the first UE is configured to suppress decoding of the control message when the message is scheduled to be transmitted during symbols that at least partially overlap with the set of symbols. In some examples, the capability reception component 1215 may determine that the multiplexing capability indicates that the UE is configured to decode the when the message is scheduled to be transmitted during symbols that at least partially overlap with the set of symbols.

In some cases, the first supported quantity of RB groups is less than four. In some cases, the first supported quantity of RB groups is one. In some cases, the first supported quantity of RB groups is less than the second supported quantity of RB groups. In some cases, a type of the UE is associated with a low-complexity mode. In some cases, the multiplexing capability is a frequency division multiplexing capability.

The capability reception component 1215 may exchange UE capability information 1245 with the CORESET configuration component 1220 in order to configure a CORESET based on a capability of the one or more UEs.

The CORESET configuration component 1220 may configure, based on the first supported quantity of RB groups, a first quantity of RB groups for a first CORESET associated with the control channel. In some examples, the CORESET configuration component 1220 may configure, based on the second supported quantity of RB groups, a second quantity of RB groups for a second CORESET associated with the control channel. The CORESET configuration component 1220 may exchange CORESET information 1250 with the control message transmission component 1225 in order to support transmission of a control message to the UE or the first UE.

The control message transmission component 1225 may transmit a control message 1260 to the first UE. In some examples, the control message transmission component 1225 may transmit a control message 1260 to the UE on the CORESET. In some examples, the control message transmission component 1225 may determine that the first supported quantity of RB groups is less than the first quantity of RB groups. In some examples, the control message transmission component 1225 may transmit the control message 1260 to the first UE via a third CORESET based on determining that the first supported quantity of RB groups is less than the first quantity of RB groups.

In some examples, the control message transmission component 1225 may determine that the first supported quantity of RB groups is greater than or equal to the first quantity of RB groups, where transmitting the control message 1260 is based on determining that the first supported quantity of RB groups is greater than or equal to the first quantity of RB groups. In some examples, the control message transmission component 1225 may determine that the message is scheduled to be transmitted during symbols that are exclusive of the set of symbols, where transmitting the control message 1260 is based on determining that the message is scheduled to be transmitted during symbols that are exclusive of the set of symbols.

The reference signal configuration component 1230 may determine that the first CORESET includes one or more wideband reference signals, where the first supported quantity of RB groups is based on the one or more wideband reference signals. In some examples, determining that the first CORESET includes one or more narrowband reference signals, where the first supported quantity of RB groups is based on the one or more narrowband reference signals. In some cases, the first supported quantity of RB groups is independent of a supported quantity of RB groups associated with one or more wideband reference signals. In some cases, the first supported quantity of RB groups is based on a supported quantity of RB groups associated with one or more wideband reference signals. In some cases, a type of the first UE is associated with a low-complexity mode.

The message scheduling component 1235 may schedule a message carried via one or more other channels for the UE based on the multiplexing capability and a set of symbols associated with a CORESET configured for the UE. In some examples, the message scheduling component 1235 may schedule the message to be transmitted during symbols that are exclusive of the set of symbols based on the multiplexing capability of the UE corresponding to the UE not supporting frequency domain multiplexing of the CORESET with the one or more other channels.

In some examples, the message scheduling component 1235 may transmit an initial control message 1265 previous to scheduling the message, the initial control message 1265 transmitted on an initial CORESET and scheduling one or more transmissions associated with the PDSCH. In some examples, the message scheduling component 1235 may schedule the message to be transmitted during symbols that at least partially overlap with the set of symbols based on the multiplexing capability of the UE corresponding to the UE supporting frequency domain multiplexing of the CORESET with the one or more other channels. In some cases, the one or more other channels include CSI, CRS, an SSB, a PBCH, a PDSCH, or any combination thereof. In some cases, the PDSCH is associated with a same bandwidth part as the CORESET.

**FIG. 13** shows a diagram of a system 1300 including a device 1305 that supports control resource configurations in accordance with aspects of the present disclosure. The device 1305 may be an example of or include the components of device 1005, device 1105, or a base station 105 as described herein. The device 1305 may include components for bi-directional voice and data communications including components for transmitting and receiving communications, including a communications manager 1310, a network communications manager 1315, a transceiver 1320, an antenna 1325, memory 1330, a processor 1340, and an inter-station communications manager 1345. These components may be in electronic communication via one or more buses (e.g., bus 1350).

The communications manager 1310 may receive, from a first UE, an indication of a first supported quantity of RB groups for a control channel, receive, from a second UE, an indication of a second supported quantity of RB groups for the control channel, configure, based on the first supported quantity of RB groups, a first quantity of RB groups for a first CORESET associated with the control channel, configure, based on the second supported quantity of RB groups, a second quantity of RB groups for a second CORESET associated with the control channel, and transmit a control message to the first UE. The communications manager 1310 may also receive, from a UE, an indication of a multiplexing capability of the UE, schedule a message carried via one or more other channels for the UE based on the multiplexing capability and a set of symbols associated with a CORESET configured for the UE, and transmit a control message to the UE on the CORESET.

The network communications manager 1315 may manage communications with the core network (e.g., via one or more wired backhaul links). For example, the network communications manager 1315 may manage the transfer of data communications for client devices, such as one or more UEs 115.

The transceiver 1320 may communicate bi-directionally, via one or more antennas, wired, or wireless links as described above. For example, the transceiver 1320 may represent a wireless transceiver and may communicate bi-directionally with another wireless transceiver. The transceiver 1320 may also include a modem to modulate the packets and provide the modulated packets to the antennas for transmission, and to demodulate packets received from the antennas.

In some cases, the wireless device may include a single antenna 1325. However, in some cases the device may have more than one antenna 1325, which may be capable of concurrently transmitting or receiving multiple wireless transmissions.

The memory 1330 may include RAM, ROM, or a combination thereof. The memory 1330 may store computer-readable code 1335 including instructions that, when executed by a processor (e.g., the processor 1340) cause the device to perform various functions described herein. In some cases, the memory 1330 may contain, among other things, a BIOS which may control basic hardware or software operation such as the interaction with peripheral components or devices.

The processor 1340 may include an intelligent hardware device, (e.g., a general-purpose processor, a DSP, a CPU, a microcontroller, an ASIC, an FPGA, a programmable logic device, a discrete gate or transistor logic component, a discrete hardware component, or any combination thereof). In some cases, the processor 1340 may be configured to operate a memory array using a memory controller. In some cases, a memory controller may be integrated into processor 1340. The processor 1340 may be configured to execute computer-readable instructions stored in a memory (e.g., the memory 1330) to cause the device 1305 to perform various functions (e.g., functions or tasks supporting control resource configurations).

The inter-station communications manager 1345 may manage communications with other base station 105, and may include a controller or scheduler for controlling communications with UEs 115 in cooperation with other base stations 105. For example, the inter-station communications manager 1345 may coordinate scheduling for transmissions to UEs 115 for various interference mitigation techniques such as beamforming or joint transmission. In some examples, the inter-station communications manager 1345 may provide an X2 interface within an LTE/LTE-A wireless communication network technology to provide communication between base stations 105.

The code 1335 may include instructions to implement aspects of the present disclosure, including instructions to support wireless communications. The code 1335 may be stored in a non-transitory computer-readable medium such as system memory or other type of memory. In some cases, the code 1335 may not be directly executable by the processor 1340 but may cause a computer (e.g., when compiled and executed) to perform functions described herein.

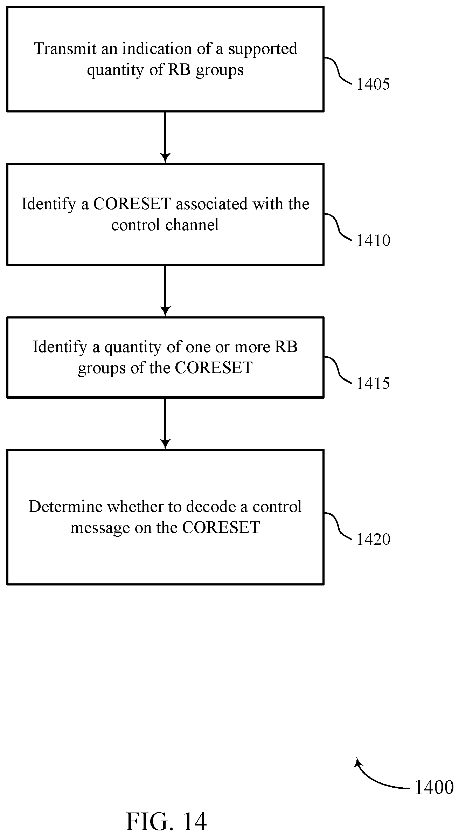

**FIG. 14** shows a flowchart illustrating a method 1400 that supports control resource configurations in accordance with the invention. The operations of method 1400 may be implemented by a UE 115 or its components as described herein. For example, the operations of method 1400 may be performed by a communications manager as described with reference to FIGs. 6 through 9. In some examples, a UE may execute a set of instructions to control the functional elements of the UE to perform the functions described below. Additionally, or alternatively, a UE may perform aspects of the functions described below using special-purpose hardware.

At 1405, the UE transmits, to a base station, an indication of a supported quantity of RB groups for a control channel. In some cases, the UE may transmit an explicit indication of the supported quantity of RB groups. In some cases, the UE may transmit an indication of a type or class of the UE, which the base station may use to determine the supported quantity of RB groups. The operations of 1405 may be performed according to the methods described herein. In some examples, aspects of the operations of 1405 may be performed by a capability indication component as described with reference to FIGs. 6 through 9.

At 1410, the UE identifies a CORESET associated with the control channel, the CORESET including one or more RB groups. In some cases, the UE may identify the CORESET based on an indication from the base station. In some cases, the UE may identify the CORESET based on one or more tables or indices associated with the UE, the base station, the control channel, or any combination thereof. The operations of 1410 may be performed according to the methods described herein. In some examples, aspects of the operations of 1410 may be performed by a CORESET identification component as described with reference to FIGs. 6 through 9.

At 1415, the UE identifies a quantity of the one or more RB groups based on identifying the CORESET. For example, the UE may identify the quantity of the one or more RB groups by identifying each group in the CORESET and incrementing a counter or by identifying a quantity indicated by the CORESET. The operations of 1415 may be performed according to the methods described herein. In some examples, aspects of the operations of 1415 may be performed by a CORESET characteristic identification component as described with reference to FIGs. 6 through 9.

At 1420, the UE determines whether to decode a control message on the CORESET based on the supported quantity of RB groups and the quantity of the one or more RB groups. For example, if the supported quantity of RB groups is lower than the quantity of the one or more RB groups, the UE may determine to suppress decoding a control message on the CORESET. If the supported quantity of RB groups is greater than or equal to the quantity of the one or more RB groups, the UE may determine to decode a control message on the CORESET. The operations of 1420 may be performed according to the methods described herein. In some examples, aspects of the operations of 1420 may be performed by a decoding determination component as described with reference to FIGs. 6 through 9.

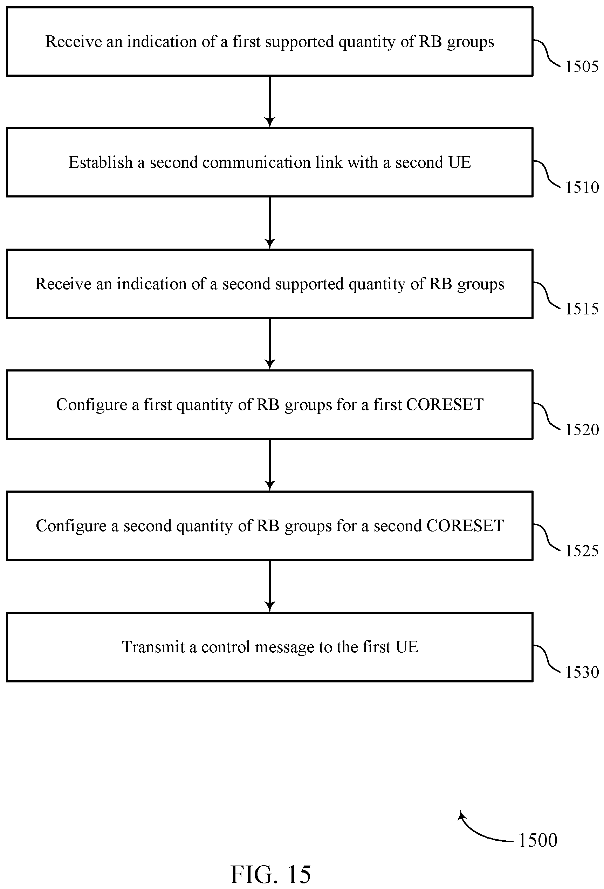

**FIG. 15** shows a flowchart illustrating a method 1500 that supports control resource configurations useful for understanding the invention. The operations of method 1500 may be implemented by a base station 105 or its components as described herein. For example, the operations of method 1500 may be performed by a communications manager as described with reference to FIGs. 10 through 13. In some examples, a base station may execute a set of instructions to control the functional elements of the base station to perform the functions described below. Additionally, or alternatively, a base station may perform aspects of the functions described below using special-purpose hardware.

At 1505, the base station may receive, from a first UE, an indication of a first supported quantity of RB groups for a control channel. In some cases, the first UE may transmit an explicit indication of the first supported quantity of RB groups. In some cases, the first UE may transmit an indication of a type or class of the first UE, which the base station may use to determine the first supported quantity of RB groups. The operations of 1505 may be performed according to the methods described herein. In some examples, aspects of the operations of 1505 may be performed by a capability reception component as described with reference to FIGs. 10 through 13.

At 1510, the base station may receive, from a second UE, an indication of a second supported quantity of RB groups for the control channel. In some cases, the second UE may transmit an explicit indication of the second supported quantity of RB groups. In some cases, the second UE may transmit an indication of a type or class of the second UE, which the base station may use to determine the second supported quantity of RB groups. The operations of 1510 may be performed according to the methods described herein. In some examples, aspects of the operations of 1510 may be performed by a capability reception component as described with reference to FIGs. 10 through 13.

At 1515, the base station may configure, based on the first supported quantity of RB groups, a first quantity of RB groups for a first CORESET associated with the control channel. For example, the base station may configure the first CORESET to include a first quantity of RB groups less than or equal to the first supported quantity of RB groups. The operations of 1515 may be performed according to the methods described herein. In some examples, aspects of the operations of 1515 may be performed by a CORESET configuration component as described with reference to FIGs. 10 through 13.

At 1520, the base station may configure, based on the second supported quantity of RB groups, a second quantity of RB groups for a second CORESET associated with the control channel. For example, the base station may configure the second CORESET to include a second quantity of RB groups less than or equal to the second supported quantity of RB groups. The operations of 1520 may be performed according to the methods described herein. In some examples, aspects of the operations of 1520 may be performed by a CORESET configuration component as described with reference to FIGs. 10 through 13.

At 1525, the base station may transmit a control message to the first UE. In some cases, the control message may represent or be associated with a control channel (e.g., a PDCCH). The operations of 1525 may be performed according to the methods described herein. In some examples, aspects of the operations of 1525 may be performed by a control message transmission component as described with reference to FIGs. 10 through 13.

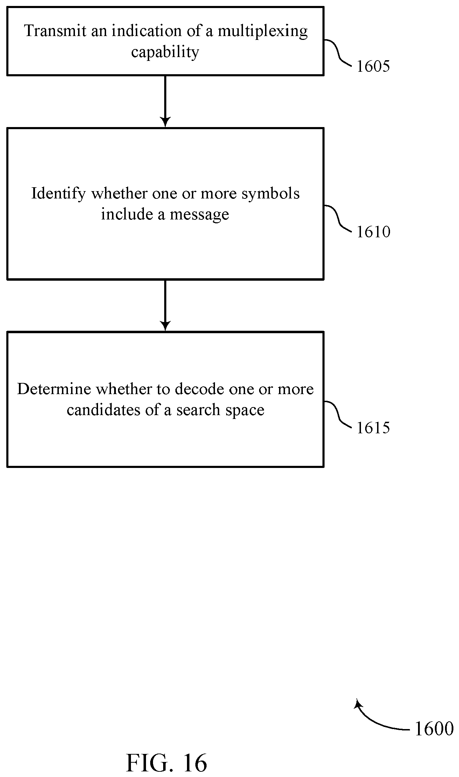

**FIG. 16** shows a flowchart illustrating a method 1600 that supports control resource configurations useful for understanding the invention. The operations of method 1600 may be implemented by a UE 115 or its components as described herein. For example, the operations of method 1600 may be performed by a communications manager as described with reference to FIGs. 6 through 9. In some examples, a UE may execute a set of instructions to control the functional elements of the UE to perform the functions described below. Additionally, or alternatively, a UE may perform aspects of the functions described below using special-purpose hardware.

At 1605, the UE may transmit, to a base station, an indication of a multiplexing capability. In some cases, the UE may transmit an explicit indication of the multiplexing capability. In some cases, the UE may transmit an indication of a type or class of the UE, which the base station may use to determine the multiplexing capability. The operations of 1605 may be performed according to the methods described herein. In some examples, aspects of the operations of 1605 may be performed by a capability indication component as described with reference to FIGs. 6 through 9.

At 1610, the UE may identify whether one or more symbols associated with a CORESET including a control channel include a message carried via one or more other channels multiplexed in frequency with the CORESET. For example, the UE may compare a CORESET configuration with one or more other scheduled communications with the base station to determine whether a message carried via one or more other channels is multiplexed in frequency with the CORESET. The operations of 1610 may be performed according to the methods described herein. In some examples, aspects of the operations of 1610 may be performed by a CORESET characteristic identification component as described with reference to FIGs. 6 through 9.

At 1615, the UE may determine whether to decode one or more candidates of a search space for the CORESET based on the multiplexing capability and whether the one or more symbols include the message. For example, if the one or more symbols include the message and the UE does not support multiplexing, the UE may determine to suppress decoding the one or more search space candidates. If the one or more symbols include the message and the UE supports multiplexing, the UE may determine to decode the one or more search space candidates. The operations of 1615 may be performed according to the methods described herein. In some examples, aspects of the operations of 1615 may be performed by a decoding determination component as described with reference to FIGs. 6 through 9.

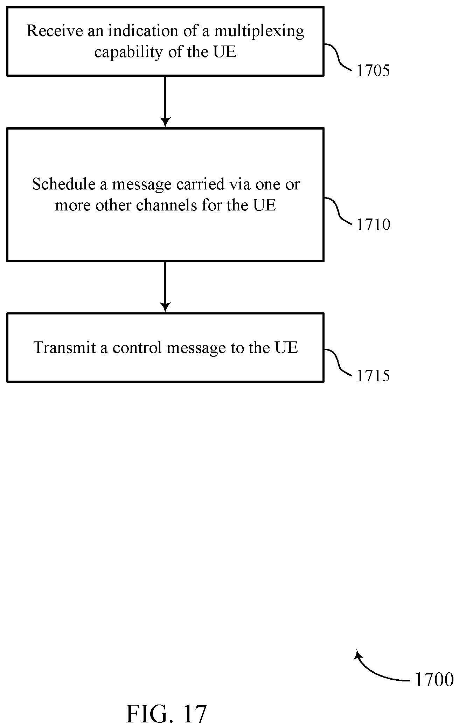

**FIG. 17** shows a flowchart illustrating a method 1700 that supports control resource configurations useful for understanding the invention. The operations of method 1700 may be implemented by a base station 105 or its components as described herein. For example, the operations of method 1700 may be performed by a communications manager as described with reference to FIGs. 10 through 13. In some examples, a base station may execute a set of instructions to control the functional elements of the base station to perform the functions described below. Additionally, or alternatively, a base station may perform aspects of the functions described below using special-purpose hardware.

At 1705, the base station may receive, from a UE, an indication of a multiplexing capability of the UE. In some cases, the UE may transmit an explicit indication of the multiplexing capability. In some cases, the UE may transmit an indication of a type or class of the UE, which the base station may use to determine the multiplexing capability. The operations of 1705 may be performed according to the methods described herein. In some examples, aspects of the operations of 1705 may be performed by a capability reception component as described with reference to FIGs. 10 through 13.

At 1710, the base station may schedule a message carried via one or more other channels for the UE based on the multiplexing capability and a set of symbols associated with a CORESET configured for the UE. For example, if the multiplexing capability of the UE indicates that the UE does not support multiplexed signals or channels, the base station may schedule the message such that the message does not overlap with any symbol of the CORESET for the UE. If the multiplexing capability of the UE indicates that the UE supports multiplexed signals or channels, the base station may schedule the message such that the message overlaps with one or more symbols of the CORESET for the UE. The operations of 1710 may be performed according to the methods described herein. In some examples, aspects of the operations of 1710 may be performed by a message scheduling component as described with reference to FIGs. 10 through 13.

At 1715, the base station may transmit a control message to the UE on the CORESET. In some cases, the control message may represent or be associated with a control channel (e.g., a PDCCH). The operations of 1715 may be performed according to the methods described herein. In some examples, aspects of the operations of 1715 may be performed by a control message transmission component as described with reference to FIGs. 10 through 13.

Although aspects of an LTE, LTE-A, LTE-A Pro, or NR system may be described for purposes of example, and LTE, LTE-A, LTE-A Pro, or NR terminology may be used in much of the description, the techniques described herein are applicable beyond LTE, LTE-A, LTE-A Pro, or NR networks. For example, the described techniques may be applicable to various other wireless communications systems such as Ultra Mobile Broadband (UMB), Institute of Electrical and Electronics Engineers (IEEE) 802.11 (Wi-Fi), IEEE 802.16 (WiMAX), IEEE 802.20, Flash-OFDM, as well as other systems and radio technologies not explicitly mentioned herein.

Information and signals described herein may be represented using any of a variety of different technologies and techniques. For example, data, instructions, commands, information, signals, bits, symbols, and chips that may be referenced throughout the description may be represented by voltages, currents, electromagnetic waves, magnetic fields or particles, optical fields or particles, or any combination thereof.

The various illustrative blocks and components described in connection with the disclosure herein may be implemented or performed with a general-purpose processor, a DSP, an ASIC, a CPU, an FPGA or other programmable logic device, discrete gate or transistor logic, discrete hardware components, or any combination thereof designed to perform the functions described herein. A general-purpose processor may be a microprocessor, but in the alternative, the processor may be any processor, controller, microcontroller, or state machine. A processor may also be implemented as a combination of computing devices (e.g., a combination of a DSP and a microprocessor, multiple microprocessors, one or more microprocessors in conjunction with a DSP core, or any other such configuration).

The functions described herein may be implemented in hardware, software executed by a processor, firmware, or any combination thereof. If implemented in software executed by a processor, the functions may be stored on or transmitted over as one or more instructions or code on a computer-readable medium. Due to the nature of software, functions described herein may be implemented using software executed by a processor, hardware, firmware, hardwiring, or combinations of any of these. Features implementing functions may also be physically located at various positions, including being distributed such that portions of functions are implemented at different physical locations.

Computer-readable media includes both non-transitory computer storage media and communication media including any medium that facilitates transfer of a computer program from one place to another. A non-transitory storage medium may be any available medium that may be accessed by a general-purpose or special purpose computer. By way of example, and not limitation, non-transitory computer-readable media may include RAM, ROM, electrically erasable programmable ROM (EEPROM), flash memory, compact disk (CD) ROM or other optical disk storage, magnetic disk storage or other magnetic storage devices, or any other non-transitory medium that may be used to carry or store desired program code means in the form of instructions or data structures and that may be accessed by a general-purpose or special-purpose computer, or a general-purpose or special-purpose processor. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of computer-readable medium. Disk and disc, as used herein, include CD, laser disc, optical disc, digital versatile disc (DVD), floppy disk and Blu-ray disc where disks usually reproduce data magnetically, while discs reproduce data optically with lasers. Combinations of the above are also included within a computer-readable media.

As used herein, the phrase "or" as used in a list of items (e.g., a list of items prefaced by a phrase such as "at least one of" or "one or more of') indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B. In other words, as used herein, the phrase "based on" shall be construed in the same manner as the phrase "based at least in part on."

In the appended figures, similar components or features may have the same reference label. Further, various components of the same type may be distinguished by following the reference label by a dash and a second label that distinguishes among the similar components. If just the first reference label is used in the specification, the description is applicable to any one of the similar components having the same first reference label irrespective of the second reference label, or other subsequent reference label.

The term "example" used herein means "serving as an example, instance, or illustration," and not "preferred" or "advantageous over other examples." The detailed description includes specific details for the purpose of providing an understanding of the described techniques. In some instances, known structures and devices are shown in block diagram form in order to avoid obscuring the concepts of the described examples.

The description herein is provided to enable a person having ordinary skill in the art to make or use the disclosure. Various modifications to the disclosure will be apparent to a person having ordinary skill in the art.

## Claims

1. A method for wireless communication at a user equipment, UE, comprising:
transmitting (510; 1405), to a network device, an indication of a supported number of groups of contiguous resource blocks for a control channel;
receiving (520), from the network device, a configuration message for configuring a control resource set, CORESET, associated with the control channel, the CORESET including one or more groups of contiguous resource blocks;
identifying (535; 1415) a number of the one or more groups of contiguous resource blocks in the CORESET based on the configuration message; and
determining (540; 1420) whether to decode a control message on the CORESET based on whether the supported number of groups of contiguous resource blocks is greater than or equal to the number of the one or more groups of contiguous resource blocks in the CORESET.

2. The method of claim 1, wherein the configuration message includes a radio resource control, RRC, message.

3. The method of claim 1, wherein transmitting the indication comprises:
transmitting a capability of the UE, the capability comprising the supported number of groups of contiguous resource blocks .

4. The method of claim 1, wherein determining whether to decode the control message further comprises:
determining that the supported number of groups of contiguous resource blocks is less than a number of the one or more groups of contiguous resource blocks in the CORESET; and
suppressing decoding of the control channel based on determining that the supported number of groups of contiguous resource blocks is less than the number of the one or more groups of contiguous resource blocks .

5. The method of claim 1, wherein determining whether to decode the control message further comprises:
determining that the supported number of groups of contiguous resource blocks is greater than or equal to a number of the one or more groups of contiguous resource blocks in the CORESET; and
decoding the control message based on determining that the supported number of groups of contiguous resource blocks is greater than or equal to the number of the one or more groups of contiguous resource blocks in the CORESET.

6. The method of claim 1, further comprising:
determining that the CORESET comprises one or more wideband reference signals, wherein the supported number of groups of contiguous resource blocks is based on the one or more wideband reference signals.

7. The method of claim 1, further comprising:
determining that the CORESET comprises one or more narrowband reference signals, wherein the supported number of groups of contiguous resource blocks is based on the one or more narrowband reference signals.

8. The method of claim 7, wherein the supported number of groups of contiguous resource blocks is independent of a supported number of groups of contiguous resource blocks associated with one or more wideband reference signals.

9. The method of claim 7, wherein the supported number of groups of contiguous resource blocks is based on a supported number of groups of contiguous resource blocks associated with one or more wideband reference signals.

10. The method of claim 1, wherein the supported number of groups of contiguous resource blocks is less than four.

11. The method of claim 10, wherein the supported number of groups of contiguous resource blocks is one.

12. An apparatus for wireless communication at a user equipment, UE, comprising:
means (725) for transmitting, to a network device, an indication of a supported number of groups of contiguous resource blocks for a control channel;
means (730) for receiving, from the network device, a configuration message for configuring a control resource set, CORESET, associated with the control channel, the CORESET including one or more groups of contiguous resource blocks;
means (735) for identifying a number of the one or more groups of contiguous resource blocks in the CORESET based on the configuration message ; and
means (740) for determining whether to decode a control message on the CORESET based on whether the supported number of groups of contiguous resource blocks is greater than or equal to the number of the one or more groups of the contiguous resource block groups in the CORESET.

13. The apparatus of claim 12, further comprising means for performing the method of any one of claims 2- 11.

14. A non-transitory computer-readable medium storing instruction for wireless communication at a user equipment, UE, wherein the instructions, when executed by a processor, cause the processor to:
transmit, to a network device, an indication of a supported number of groups of contiguous resource blocks for a control channel;
receive, from the network device, a configuration message for configuring a control resource set, CORESET, associated with the control channel, the CORESET including one or more groups of contiguous resource blocks;
identify a number of the one or more groups of contiguous resource blocks in the CORESET based on the configuration message; and
determine whether to decode a control message on the CORESET based on whether the supported number of groups of contiguous resource blocks is greater than or equal to the number of the one or more groups of contiguous resource blocks in the CORESET.

15. The non-transitory computer-readable medium further storing instructions which, when executed by a processor, cause the processor to perform the method of any one of claims 2- 11.

## Patentansprüche

1. Verfahren zur drahtlosen Kommunikation an einem Benutzergerät, UE, das Folgendes beinhaltet:
Übertragen (510; 1405), zu einem Netzwerkgerät, einer Angabe einer unterstützten Anzahl von Gruppen zusammenhängender Ressourcenblöcke für einen Steuerkanal;
Empfangen (520), von dem Netzwerkgerät, einer Konfigurationsmeldung zum Konfigurieren eines mit dem Steuerkanal assoziierten CORESET (Control Resource Set), wobei der CORESET eine oder mehrere Gruppen zusammenhängender Ressourcenblöcke umfasst;
Identifizieren (535; 1415) einer Anzahl der ein oder mehreren Gruppen zusammenhängender Ressourcenblöcke in dem CORESET auf der Basis der Konfigurationsmeldung; und
Feststellen (540; 1420), ob eine Steuermeldung auf dem CORESET decodiert werden soll, auf der Basis davon, ob die unterstützte Anzahl von Gruppen zusammenhängender Ressourcenblöcke so groß wie oder größer als die Anzahl der ein oder mehreren Gruppen zusammenhängender Ressourcenblöcke im CORESET ist.

2. Verfahren nach Anspruch 1, wobei die Konfigurationsmeldung eine RRC-(Radio Resource Control)-Meldung enthält.

3. Verfahren nach Anspruch 1, wobei das Übertragen der Angabe Folgendes beinhaltet:
Übertragen einer Fähigkeit des UE, wobei die Fähigkeit die unterstützte Anzahl von Gruppen zusammenhängender Ressourcenblöcke umfasst.

4. Verfahren nach Anspruch 1, wobei das Feststellen, ob die Steuermeldung decodiert werden soll, ferner Folgendes beinhaltet:
Feststellen, dass die unterstützte Anzahl von Gruppen zusammenhängender Ressourcenblöcke kleiner ist als eine Anzahl der ein oder mehreren Gruppen zusammenhängender Ressourcenblöcke im CORESET; und
Unterdrücken des Decodierens des Steuerkanals auf der Basis der Feststellung, dass die unterstützte Anzahl von Gruppen zusammenhängender Ressourcenblöcke kleiner ist als die Anzahl der ein oder mehreren Gruppen zusammenhängender Ressourcenblöcke.

5. Verfahren nach Anspruch 1, wobei das Feststellen, ob die Steuermeldung decodiert werden soll, ferner Folgendes beinhaltet:
Feststellen, dass die unterstützte Anzahl von Gruppen zusammenhängender Ressourcenblöcke so groß wie oder größer als die Anzahl der ein oder mehreren Gruppen zusammenhängender Ressourcenblöcke im CORESET ist; und
Decodieren der Steuermeldung auf der Basis der Feststellung, dass die unterstützte Anzahl von Gruppen zusammenhängender Ressourcenblöcke so groß wie oder größer als die Anzahl der ein oder mehreren Gruppen zusammenhängender Ressourcenblöcke im CORESET ist.

6. Verfahren nach Anspruch 1, das ferner Folgendes beinhaltet:
Feststellen, dass der CORESET ein oder mehrere Breitband-Referenzsignale umfasst, wobei die unterstützte Anzahl von Gruppen zusammenhängender Ressourcenblöcke auf den ein oder mehreren Breitband-Referenzsignalen basiert.

7. Verfahren nach Anspruch 1, das ferner Folgendes beinhaltet:
Feststellen, dass der CORESET ein oder mehrere Schmalband-Referenzsignale umfasst, wobei die unterstützte Anzahl von Gruppen zusammenhängender Ressourcenblöcke auf den ein oder mehreren Schmalband-Referenzsignalen basiert.

8. Verfahren nach Anspruch 7, wobei die unterstützte Anzahl von Gruppen zusammenhängender Ressourcenblöcke unabhängig von einer unterstützten Anzahl von Gruppen zusammenhängender Ressourcenblöcke ist, die mit einem oder mehreren Breitband-Referenzsignalen assoziiert sind.

9. Verfahren nach Anspruch 7, wobei die unterstützte Anzahl von Gruppen zusammenhängender Ressourcenblöcke auf einer unterstützten Anzahl von Gruppen zusammenhängender Ressourcenblöcke basiert, die mit einem oder mehreren Breitband-Referenzsignalen assoziiert sind.

10. Verfahren nach Anspruch 1, wobei die unterstützte Anzahl von Gruppen zusammenhängender Ressourcenblöcke weniger als vier beträgt.

11. Verfahren nach Anspruch 10, wobei die unterstützte Anzahl von Gruppen zusammenhängender Ressourcenblöcke eins ist.

12. Vorrichtung zur drahtlosen Kommunikation an einem Benutzergerät, UE, die Folgendes umfasst:
Mittel (725) zum Übertragen, zu einem Netzwerkgerät, einer Angabe einer unterstützten Anzahl von Gruppen zusammenhängender Ressourcenblöcke für einen Steuerkanal;
Mittel (730) zum Empfangen, von dem Netzwerkgerät, einer Konfigurationsmeldung zum Konfigurieren eines mit dem Steuerkanal assoziierten CORESET (Control Resource Set), wobei der CORESET eine oder mehrere Gruppen zusammenhängender Ressourcenblöcke umfasst;
Mittel (735) zum Identifizieren einer Anzahl der ein oder mehreren Gruppen zusammenhängender Ressourcenblöcke in dem CORESET auf der Basis der Konfigurationsmeldung; und
Mittel (740) zum Feststellen, ob eine Steuermeldung auf dem CORESET decodiert werden soll, auf der Basis davon, ob die unterstützte Anzahl von Gruppen zusammenhängender Ressourcenblöcke so groß wie oder größer als die Anzahl der ein oder mehreren Gruppen zusammenhängender Ressourcenblöcke im CORESET ist.

13. Vorrichtung nach Anspruch 12, die ferner Mittel zum Durchführen des Verfahrens nach einem der Ansprüche 2-11 umfasst.

14. Nichtflüchtiges, computerlesbares Medium, das Befehle für drahtlose Kommunikation an einem Benutzergerät, UE, speichert, wobei die Befehle bei Ausführung durch einen Prozessor den Prozessor veranlassen zum:
Übertragen, zu einem Netzwerkgerät, einer Angabe einer unterstützten Anzahl von Gruppen zusammenhängender Ressourcenblöcke für einen Steuerkanal;
Empfangen, von dem Netzwerkgerät, einer Konfigurationsmeldung zum Konfigurieren eines mit dem Steuerkanal assoziierten CORESET (Control Resource Set), wobei der CORESET eine oder mehrere Gruppen zusammenhängender Ressourcenblöcke umfasst;
Identifizieren einer Anzahl der ein oder mehreren Gruppen zusammenhängender Ressourcenblöcke in dem CORESET auf der Basis der Konfigurationsmeldung; und
Feststellen, ob eine Steuermeldung auf dem CORESET decodiert werden soll, auf der Basis davon, ob die unterstützte Anzahl von Gruppen zusammenhängender Ressourcenblöcke so groß wie oder größer als die Anzahl der ein oder mehreren Gruppen zusammenhängender Ressourcenblöcke im CORESET ist.

15. Nichtflüchtiges computerlesbares Medium, das ferner Befehle speichert, die bei Ausführung durch einen Prozessor den Prozessor zum Durchführen des Verfahrens nach einem der Ansprüche 2-11 veranlassen.

## Revendications

1. Procédé de communication sans fil au niveau d'un équipement utilisateur, UE, comprenant :
la transmission (510 ; 1405), à un dispositif de réseau, d'une indication d'un nombre pris en charge de groupes de blocs de ressources contigus pour un canal de commande ;
la réception (520), en provenance du dispositif réseau, d'un message de configuration pour configurer un ensemble de ressources de commande, CORESET, associé au canal de commande, le CORESET comportant un ou plusieurs groupes de blocs de ressources contigus ;
l'identification (535 ; 1415) d'un nombre des un ou plusieurs groupes de blocs de ressources contigus dans le CORESET sur la base du message de configuration ; et
la détermination (540 ; 1420) de décoder ou non un message de commande sur le CORESET selon que le nombre de groupes de blocs de ressources contigus pris en charge est ou non supérieur ou égal au nombre des un ou plusieurs groupes de blocs de ressources contigus dans le CORESET.

2. Procédé selon la revendication 1, dans lequel le message de configuration comporte un message de commande de ressources radio, RRC.

3. Procédé selon la revendication 1, dans lequel la transmission de l'indication comprend :
la transmission d'une capabilité de l'UE, la capabilité comprenant le nombre pris en charge de groupes de blocs de ressources contigus.

4. Procédé selon la revendication 1, dans lequel la détermination de décoder ou non le message de commande comprend en outre :
la détermination que le nombre pris en charge de groupes de blocs de ressources contigus est inférieur à un nombre des un ou plusieurs groupes de blocs de ressources contigus dans le CORESET ; et
la suppression du décodage du canal de commande sur la base de la détermination que le nombre pris en charge de groupes de blocs de ressources contigus est inférieur au nombre des un ou plusieurs groupes de blocs de ressources contigus.

5. Procédé selon la revendication 1, dans lequel la détermination de décoder ou non le message de commande comprend en outre :
la détermination que le nombre pris en charge de groupes de blocs de ressources contigus est supérieur ou égal à un nombre des un ou plusieurs groupes de blocs de ressources contigus dans le CORESET ; et
le décodage du message de commande sur la base de la détermination que le nombre pris en charge de groupes de blocs de ressources contigus est supérieur ou égal au nombre des un ou plusieurs groupes de blocs de ressources contigus dans le CORESET.

6. Procédé selon la revendication 1, comprenant en outre :
la détermination que le CORESET comprend un ou plusieurs signaux de référence à large bande, dans lequel le nombre pris en charge de groupes de blocs de ressources contigus est basé sur les un ou plusieurs signaux de référence à large bande.

7. Procédé selon la revendication 1, comprenant en outre :
la détermination que le CORESET comprend un ou plusieurs signaux de référence à bande étroite, dans lequel le nombre pris en charge de groupes de blocs de ressources contigus est basé sur les un ou plusieurs signaux de référence à bande étroite.

8. Procédé selon la revendication 7, dans lequel le nombre pris en charge de groupes de blocs de ressources contigus est indépendant d'un nombre pris en charge de groupes de blocs de ressources contigus associés à un ou plusieurs signaux de référence à large bande.

9. Procédé selon la revendication 7, dans lequel le nombre pris en charge de groupes de blocs de ressources contigus est basé sur un nombre pris en charge de groupes de blocs de ressources contigus associés à un ou plusieurs signaux de référence à large bande.

10. Procédé selon la revendication 1, dans lequel le nombre pris en charge de groupes de blocs de ressources contigus est inférieur à quatre.

11. Procédé selon la revendication 10, dans lequel le nombre pris en charge de groupes de blocs de ressources contigus est de un.

12. Appareil de communication sans fil au niveau d'un équipement utilisateur, UE comprenant :
un moyen (725) de transmission, à un dispositif de réseau, d'une indication d'un nombre pris en charge de groupes de blocs de ressources contigus pour un canal de commande ;
un moyen (730) de réception, en provenance du dispositif de réseau, d'un message de configuration pour configurer un ensemble de ressources de commande, CORESET, associé au canal de commande, le CORESET comportant un ou plusieurs groupes de blocs de ressources contigus ;
un moyen (735) d'identification d'un nombre des un ou plusieurs groupes de blocs de ressources contigus dans le CORESET sur la base du message de configuration ; et
un moyen (740) de détermination de décoder ou non un message de commande sur le CORESET selon que le nombre pris en charge de groupes de blocs de ressources contigus est ou non supérieur ou égal au nombre des un ou plusieurs groupes de groupes de blocs de ressources contigus dans le CORESET.

13. Dispositif selon la revendication 12, comprenant en outre des moyens de réalisation du procédé selon l'une quelconque des revendications 2 à 11.

14. Support non transitoire lisible par ordinateur stockant des instructions pour des communication sans fil au niveau d'un équipement utilisateur, UE, dans lequel les instructions, à leur exécution par un processeur, amènent le processeur à :
transmettre, à un dispositif de réseau, une indication d'un nombre pris en charge de groupes de blocs de ressources contigus pour un canal de commande ;
recevoir, en provenance du dispositif de réseau, un message de configuration pour configurer un ensemble de ressources de commande, CORESET, associé au canal de commande, le CORESET comportant un ou plusieurs groupes de blocs de ressources contigus ;
identifier un nombre des un ou plusieurs groupes de blocs de ressources contigus dans le CORESET sur la base du message de configuration ; et
déterminer de décoder ou non un message de commande sur le CORESET selon que le nombre de groupes de blocs de ressources contigus pris en charge est ou non supérieur ou égal au nombre des un ou plusieurs groupes de blocs de ressources contigus dans le CORESET.

15. Support non transitoire lisible par ordinateur stockant en outre des instructions qui, à leur exécution par un processeur, amènent le processeur à réaliser le procédé selon l'une quelconque des revendications 2 à 11.
